(19) Europäisches Patentamt

European Patent Office

Office européen des brevets

(11) **EP 1 245 988 A2**

(12) **EUROPEAN PATENT APPLICATION**

(43) Date of publication:
02.10.2002  Bulletin 2002/40

(51) Int Cl.7: **G02B 26/02**, G09F 9/37

(21) Application number: 02252162.9

(22) Date of filing: 26.03.2002

(84) Designated Contracting States:
AT BE CH CY DE DK ES FI FR GB GR IE IT LI LU MC NL PT SE TR
Designated Extension States:
AL LT LV MK RO SI

(30) Priority: 27.03.2001 JP 2001089848

(71) Applicant: NGK INSULATORS, LTD.
Nagoya City Aichi Pref. (JP)

(72) Inventors:
- Takeuchi,Yukihisa, NKG Insulators Ltd.,I.P.D.
  Nagoya-shi, Aichi-ken 467-8530 (JP)
- Tsuji, Hiroyuki, c/o NGK Insulators Ltd,I.P.D.
  Nagoya-shi, Aichi-ken 467-8530 (JP)

- Nanataki, Tsutomu, c/o NGK Insulators Ltd I.P.D
  Nagoya-shi, Aichi-ken 467-8530 (JP)
- Ohwada, Iwao, c/o NGK Insulators Ltd,I.P.D.
  Nagoya-shi, Aichi-ken 467-8530 (JP)
- Toyama, Nobutoshi,
  c/o NGK Insulators Ltd I.P.D.
  Nagoya-shi, Aichi-ken 467-8530 (JP)
- Noguchi, Nobuchika,
  c/o NGK Insulators Ltd I.P.D.
  Nagoya-shi, Aichi-ken 467-8530 (JP)

(74) Representative: Paget, Hugh Charles Edward et al
MEWBURN ELLIS
York House
23 Kingsway
London WC2B 6HP (GB)

(54) **Display apparatus**

(57)    A light absorbing member (210) is disposed on the periphery of a display element (14), a light absorbing layer (214) is applied to an area that appears as a bright defect, and a projection (216) is disposed on a surface of an optical waveguide panel (20) of the display element (14) which confronts a large-size light guide panel (140). If the projection (216) comprises at least three projections, then the projections should preferably be disposed in respective positions spaced from the closest side of the display element (14) by a distance of at most L/3 where L represents the length of a longer side of the display element (14).

FIG. 1

Printed by Jouve, 75001 PARIS (FR)

**Description**

BACKGROUND OF THE INVENTION

Field of the Invention:

The present invention relates to a display apparatus, and more particularly to a display apparatus suitable for use as a large-screen display apparatus having an array of display elements each having an optical waveguide panel for introducing light from a light source.

Description of the Related Art:

Heretofore, there have been known in the art various display apparatus including cathode-ray tubes (CRTs) and liquid crystal display units.

Ordinary television receivers and monitor display units for use with computers are known as typical cathode-ray tubes. While these cathode-ray tubes are capable of displaying bright images on the screen, they consume a large amount of electric energy and have a depth, i.e., a dimension backward from the screen, which is large as compared with the size of the screen.

The liquid crystal display units have the advantages of smaller sizes and reduced power consumption, but suffer lower levels of image brightness and smaller angles of view.

Cathode-ray tubes and liquid crystal display units which are designed to display color images need to have three time more pixels than black-and-white designs, and hence are more complex in structure, consumes more energy, and are higher in cost.

The applicant of the present application has proposed a novel display apparatus in an attempt to solve the above problems (see, for example, Japanese laid-open patent publication No. 7-287176). As shown in FIG. 42 of the accompanying drawings, the proposed display apparatus has an array of actuators 400 associated with respective pixels. Each of the actuators 400 has an actuator unit 408 comprising a piezoelectric/electrostrictive layer 402, an upper electrode 404 mounted on an upper surface of the piezoelectric/electrostrictive layer 402, and a lower electrode 406 mounted on a lower surface of the piezoelectric/electrostrictive layer 402, and a base body 414 comprising a vibrator 410 disposed underneath the actuator unit 408 and a stationary block 412 joined to the vibrator 410. The lower electrode 406 is held against the vibrator 410, which supports the actuator unit 408 thereon.

The vibrator 410 and the stationary block 412 are integrally formed of ceramics. The base body 414 has a recess 416 defined therein beneath the vibrator 410 so that the vibrator 410 is thinner than the stationary block 412.

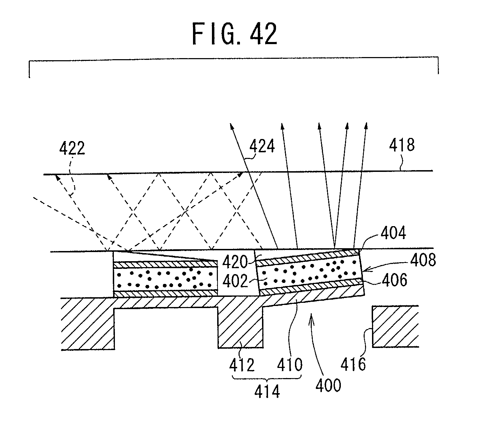

A displacement transfer element 420 for providing a predetermined area of contact with an optical waveguide panel 418 is joined to the upper electrode 404. In FIG. 42, when the actuator 400 is turned off or unselected, i.e., when the actuator 400 is not moved, the displacement transfer element 420 is positioned in the vicinity of the optical waveguide panel 418, and when the actuator 400 is turned on, the displacement transfer element 420 is brought into contact with the optical waveguide panel 418 by a distance equal to or smaller than the wavelength of light.

Light 422 is introduced into the optical waveguide panel 418 from a lateral end thereof, for example. The optical waveguide panel 418 has its refractive index pre-adjusted to cause all the light 422 to be totally reflected within the optical waveguide panel 418 without passing through front and rear surfaces thereof. When a voltage signal depending on the attributes of an image signal is selectively applied to the actuator 400 via the upper electrode 404 and the lower electrode 406 to displace the actuator 400 differently, i.e., to turn on, turn off, or unselect the actuator 400, for thereby controlling the movement of the displacement transfer element 420 into or out of contact with optical waveguide panel 418. Thus, dispersed light (leaking light) 424 from a given area, aligned with the actuator 400, of the optical waveguide panel 418 is controlled to display an image depending on the image signal on the optical waveguide panel 418.

For displaying a color image on the display apparatus, light sources of three primary colors for emitting primary color lights into the optical waveguide panel 418 are switched, and primary color light emission times are controlled to synchronize the times of contact between the optical waveguide panel 418 and the displacement transfer element 420 with light emission periods, or alternatively the times of contact between the optical waveguide panel 418 and the displacement transfer element 420 are controlled to synchronize primary color light emission times with light emission periods.

Therefore, the proposed display apparatus as it is used in color display applications does not need to have more pixels than black-and-white display apparatus.

Recently, there have also been proposed display apparatus for controlling selective light emission from pixels based on the displacement of actuators, the pixels incorporating color filters or colored scattering bodies thereby to dispense with the switching of primary color light sources for displaying clear color images.

Various many technologies have been proposed and used in the art to fabricate large-screen display apparatus comprising an array of display elements. See, for example, Japanese utility model publication No. 4-53675 and Japanese patent publication No. 8-17086. These large-screen display apparatus are designed such that any defective display elements can be easily replaced with a new one.

A light guide panel may possibly be warped by the heat generated when the display elements are energized and also when light from the light source is absorbed by the black matrix or the like. If the light guide panel is warped, then the internal pressure of a matching oil which is present between the light guide panel and the display elements which are bonded to the light guide panel differs between peripheral and central areas of the display elements.

Air bubbles then tend to be introduced into the region of the matching oil where the internal pressure is lower. When air bubbles are present in the matching oil between the display elements and the light guide panel, light passing through the matching oil layer is applied to the air bubbles and scattered or refracted by the air bubbles, and visually recognized as light emitted from adjacent pixels, resulting in a cross-talk image or a black dot defect.

SUMMARY OF THE INVENTION

It is therefore an object of the present invention to provide a display apparatus which is highly reparable to allow any defective display elements to be easily replaced with a new one.

Another object of the present invention is to provide a display apparatus which is designed to prevent cross-talk images and black dot defects from being produced due to the warpage of a light guide panel for thereby increasing the quality of displayed images.

According to the present invention, there is provided a display apparatus comprising a light guide panel for introducing light from a light source thereinto, at least two display elements arrayed on a principal surface of the light guide panel, a first light-transmissive substance e.g. a substance whose refractive index has been suitably selected or adjusted, interposed at least between the light guide panel and the display elements, and a second substance for making the first substance flowable or maintaining the first substance in a flowable state, the second substance being interposed at least between the light guide panel and the display elements.

Generally, the light guide panel may be warped due to the heat generated when the display elements are energized and also when light from the light source is absorbed by the black matrix or the like. If the light guide panel is warped, then the internal pressure of the first substance which is present between the light guide panel and the display elements which are bonded to the light guide panel differs between peripheral and central areas of the display elements.

Air bubbles then tend to be introduced into the region of the first substance where the internal pressure is lower. When air bubbles are present between the display elements and the light guide panel, light passing through the first substance is applied to the air bubbles and scattered or refracted by the air bubbles, and visually recognized as light emitted from adjacent pixels, resulting in a cross-talk image or a black dot defect.

According to the present invention, since the second substance that makes the first substance flowable is present between the light guide panel and the display elements, the first substance present between the display elements and the light guide panel is made highly flowable. As a result, even if a differential pressure is developed in the first substance due to a deformation of the light guide panel upon energization of the display apparatus, the first substance flows to reduce the differential pressure, preventing air bubbles from being introduced into the first substance. Inasmuch as the first substance is made highly flowable, the display elements can easily be removed and repaired.

The first substance may comprise a matching oil, and the second substance may constitute a light-transmissive member.

The second substance may be included in each of the display elements, and constitute a projection disposed on a surface of an optical waveguide panel of each of the display elements which confronts the light guide panel, or a projection disposed on a surface of the light guide panel which confronts the display elements and provided in an area corresponding to one of the display elements.

The display apparatus may further comprise a module optical waveguide panel interposed between the light guide panel and the display elements, providing a display module including the display elements therein, the first substance being interposed at least between the module optical waveguide panel and the display elements.

The second substance may be included in each of the display elements, and constitute a projection disposed on a surface of an optical waveguide panel of each of the display elements which confronts the module optical waveguide panel, or a projection disposed on a surface of the module optical waveguide panel which confronts the display elements and provided in an area corresponding to one of the display elements.

The display apparatus may further comprise a module optical waveguide panel interposed between the light guide panel and the display elements, providing a display module including the display elements therein, the first substance being interposed at least between the light guide panel and the module optical waveguide panel.

The second substance may be included in each of the display elements, and constitute a projection disposed on a surface of the module optical waveguide panel which confronts the display elements and provided in an area corresponding to one of the display elements, or a projection disposed on a surface of the light guide panel which confronts the module optical waveguide panel and provided in an area corresponding to one of the display elements.

The projection should preferably comprise three projections included in each of the display elements. The projections should preferably be disposed in respective positions spaced from at least one side of each of the display elements by a distance of at most L/3 where L represents the length of a longer side of the display elements.

The projections should preferably be positioned in alignment with pillars of each of the display elements. Even when pressing forces are applied to the projections due to a deformation of the light guide panel, an optical waveguide panel of the display apparatus is prevented from being deformed or damaged because the pressing forces are borne by the pillars, and light emitted from pixels is prevented from being scattered in part by the projections.

If the projections comprise light absorbing members, then they function as a black matrix for achieving increased contrast.

The projection may comprise at least one strip-like projection in each of the display elements, or at least one frame-like projection in each of the display elements.

The second substance may constitute beads mixed with the first substance.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a fragmentary cross-sectional view of display elements of a display apparatus according to the present invention;

FIG. 2 is a view showing a pixel layout of display elements;

FIG. 3 is a fragmentary cross-sectional view of a specific structure of an actuator and a pixel assembly;

FIG. 4 is a fragmentary cross-sectional view of another arrangement of display elements;

FIG. 5 is a view showing pixel assemblies each surrounded by pillars at respective four corners;

FIG. 6 is a view showing another pillar;

FIG. 7 is a diagram showing, by way of example, the relationship between an offset potential (bias potential) outputted from a row electrode drive circuit, the potentials of on- and off-signals outputted from a column electrode drive circuit, and voltages applied between row and column electrodes;

FIG. 8 is a perspective view of a display apparatus according to a first embodiment of the present invention;

FIG. 9 is an exploded perspective view showing an example in which a display element is fixed in position;

FIG. 10 is an exploded perspective view showing another example in which a display element is fixed in position;

FIG. 11 is an enlarged fragmentary cross-sectional view showing a structure between display elements;

FIG. 12A is a plan view showing an example in which three dot-like projections are disposed on the optical waveguide panel of a display element;

FIG. 12B is a plan view showing an example in which two strip-like projections are disposed on the optical waveguide panel of a display element;

FIG. 12C is a plan view showing an example in which a frame-like projection is disposed on the optical waveguide panel of a display element;

FIG. 13A is a plan view of a first structure in which projections are disposed on an optical waveguide panel;

FIG. 13B is a plan view of a second structure in which projections are disposed on an optical waveguide panel;

FIG. 14A is a plan view of a third structure in which projections are disposed on an optical waveguide panel;

FIG. 14B is a plan view of a fourth structure in which projections are disposed on an optical waveguide panel;

FIG. 15 is an enlarged fragmentary cross-sectional view showing an arrangement in which beads are mixed with a substance such as a matching oil;

FIG. 16 is an enlarged fragmentary cross-sectional view showing another arrangement in which banks are disposed on the reverse side of a display element;

FIG. 17 is an enlarged fragmentary cross-sectional view showing a sealing structure between display elements;

FIG. 18 is a cross-sectional view showing a bulge of a substance such as a matching oil on a lower portion of a large-size light guide panel;

FIG. 19 is a front elevational view showing a first countermeasure arrangement;

FIG. 20A is a front elevational view showing a second countermeasure arrangement;

FIG. 20B is a cross-sectional view taken along line XXB - XXB of FIG. 20A;

FIG. 21 is a perspective view of a display apparatus according to a second embodiment of the present invention;

FIG. 22 is an enlarged fragmentary cross-sectional view showing a first arrangement of a sealing structure between display elements of the display apparatus according to the second embodiment;

FIG. 23 is an enlarged fragmentary cross-sectional view showing a second arrangement of the sealing structure between the display elements of the display apparatus according to the second embodiment;

FIG. 24 is an enlarged fragmentary cross-sectional view showing a third arrangement of the sealing structure between the display elements of the display apparatus according to the second embodiment;

FIG. 25 is an enlarged fragmentary cross-sectional view showing a fourth arrangement of the sealing structure between the display elements of the display apparatus according to the second embodiment;

FIG. 26 is an enlarged fragmentary cross-sectional view showing a fifth arrangement of the sealing structure between the display elements of the display apparatus according to the second embodiment;

FIG. 27 is an enlarged fragmentary cross-sectional view showing a sixth arrangement of the sealing structure between the display elements of the display apparatus according to the second embodiment;

FIG. 28 is a perspective view of a display apparatus according to a third embodiment of the present invention;

FIG. 29 is an exploded perspective view of a display block;

FIG. 30 is an exploded perspective view of another display block;

FIG. 31 is a view showing display blocks stacked and fixed in a frame;

FIG. 32 is a view illustrative of a pixel pitch at a joint between display blocks;

FIG. 33 is an enlarged fragmentary cross-sectional view showing a first arrangement of a sealing structure between display elements of the display apparatus according to the third embodiment;

FIG. 34 is an enlarged fragmentary cross-sectional view showing a second arrangement of the sealing structure between the display elements of the display apparatus according to the third embodiment;

FIG. 35 is a perspective view of a display apparatus according to a fourth embodiment of the present invention;

FIG. 36 is an enlarged fragmentary cross-sectional view showing a first arrangement of a sealing structure between display elements of the display apparatus according to the fourth embodiment;

FIG. 37 is an enlarged fragmentary cross-sectional view showing a second arrangement of the sealing structure between the display elements of the display apparatus according to the fourth embodiment;

FIG. 38 is an enlarged fragmentary cross-sectional view showing a third arrangement of the sealing structure between the display elements of the display apparatus according to the fourth embodiment;

FIG. 39 is an enlarged fragmentary cross-sectional view showing a fourth arrangement of the sealing structure between the display elements of the display apparatus according to the fourth embodiment;

FIG. 40 is an enlarged fragmentary cross-sectional view showing a fifth arrangement of the sealing structure between the display elements of the display apparatus according to the fourth embodiment;

FIG. 41 is an enlarged fragmentary cross-sectional view showing a sixth arrangement of the sealing structure between the display elements of the display apparatus according to the fourth embodiment; and

FIG. 42 is a fragmentary cross-sectional view showing conventional display elements.

## DESCRIPTION OF THE PREFERRED EMBODIMENTS

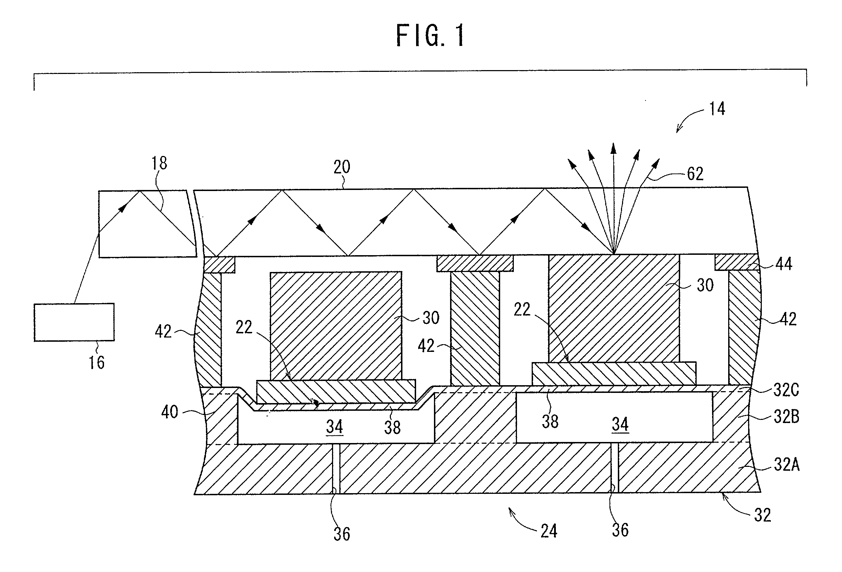

Display apparatus according to various embodiments of the present invention and processes of manufacturing the display apparatus will be described below with reference to FIGS. 1 through 41.

A display element 14 for use in the display apparatus will first be described below with reference to FIGS. 1 through 7.

As shown in FIG. 1, the display element 14 comprises an optical waveguide panel 20 into which light 18 emitted from a light source 16 is introduced, and a drive unit 24 disposed in confronting relation to a rear surface of the optical waveguide panel 20 and having a matrix or staggered array of actuators 22 aligned with respective pixels.

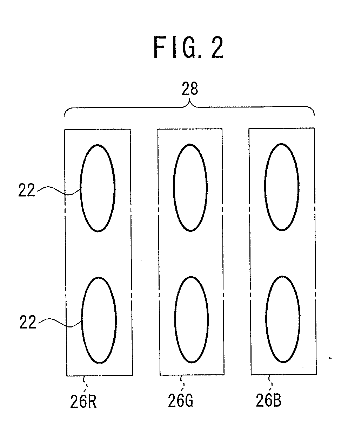

As shown in FIG. 2, two actuators 22 arrayed in a vertical direction make up a single dot 26, and three dots 26 including a red dot 26R, a green dot 26G, and a blue dot 26B which are arrayed in a horizontal direction make up a single pixel 28. The pixels 28 of the display element 14 are arranged in horizontal rows each containing 16 pixels (48 dots) and vertical columns each containing 16 pixels (16 dots).

The display element 14 also includes pixel assemblies 30 disposed respectively on the actuators 22. The pixel assemblies 30 have a function to increase their area of contact with the optical waveguide panel 20 into an area depending on the area of each pixel.

The drive unit 24 has an actuator board 32 made of ceramics, for example, with the actuators 22 disposed on the actuator board 32 at respective positions corresponding to the pixels 28. The actuator board 32 has one continuous principal surface facing the rear surface of the optical waveguide panel 20. The actuator board 32 has a plurality of cavities 34 defined in the respective positions corresponding to the pixels 28 and serving part of vibrators (described below). The cavities 34 communicate with the space around the display element 14 via small-diameter through holes 36 which are defined in the opposite surface of the actuator board 32.

The actuator board 32 includes thin-wall portions lying over the respective cavities 34 and thick-wall portions extending between the thin-wall portions. The thin-wall portions function as vibrators 38 which can easily be vibrated under external stresses applied there-

to. The thick-wall portions function as stationary blocks 40 supporting the vibrators 38 therebetween over the cavities 34.

The actuator board 32 may be regarded as a unitary laminated structural body having a lowermost board layer 32A, an intermediate spacer layer 32B, and an uppermost thin layer 32C, with the cavities 34 defined in the spacer layer 32B in alignment with the respective actuators 22. The board layer 32A functions as both a stiffening board and a wiring board. The actuator board 32 may be of an integrally sintered structure or may be made up of separate layers which are combined together.

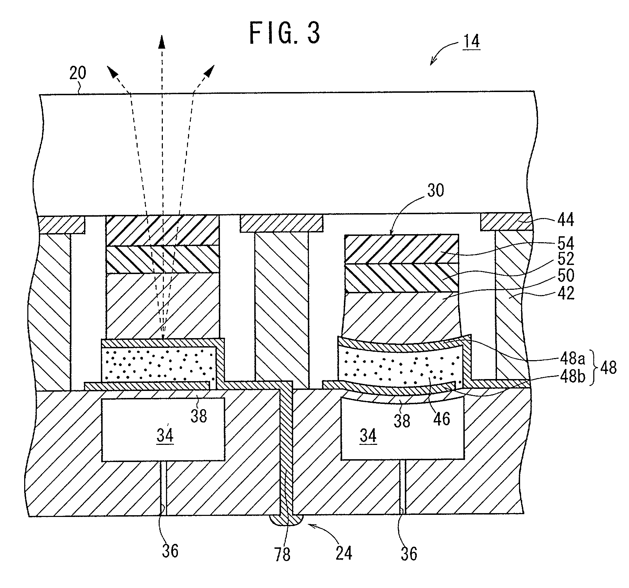

A specific example of the actuator 22 and the pixel assembly 30 will be described below with reference to FIGS. 1 through 7. In FIGS. 1 and 3, gap forming layers 44 are disposed between pillars 42 (described later on) and the optical waveguide panel 20. The gap forming layers 44 should preferably comprise light blocking layers. The gap forming layers 44 may be made of a metal having a low light absorbing capability, such as Cr, Al, Ni, Ag, or the like, a resin containing carbon black, black pigment, or black dye, or a transparent cured resin having a low light dispersing capability. The gap forming layers 44 made of such a material function as a black matrix.

As shown in FIG. 3, the actuator 22 has, in addition to the vibrator 38 and the stationary block 40, a shape holding layer 46 in the form of a piezoelectric/electrostrictive layer or an anti-ferrodielectric layer formed directly on the vibrator 38, and a pair of electrodes 48 disposed respectively on upper and lower surfaces of the shape holding layer 46. The electrodes 48 comprise an upper row electrode 48a and a low column electrode 48b.

The electrodes 48 may be disposed on the upper and lower surfaces of the shape holding layer 46, as shown in FIG. 3, or may be disposed on the upper or lower surface of the shape holding layer 46.

If the electrodes 48 are disposed on one of the upper and lower surfaces of the shape holding layer 46, then the electrodes 48 may comprise comb-shaped teeth disposed in an interdigitating relation to each other, or may be of a spiral shape or a multi-branch shape as disclosed in Japanese laid-open patent publication No. 10-78549.

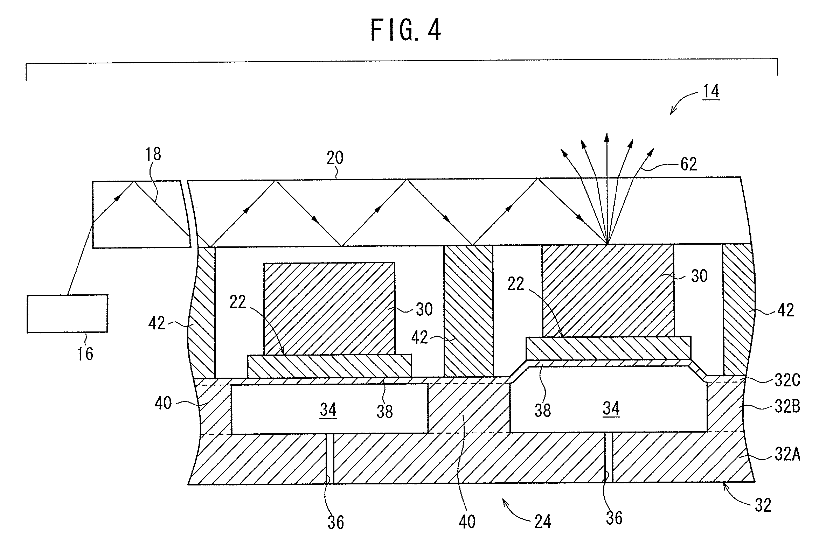

If the row electrode 48a is disposed on the upper surface of the shape holding layer 46 and the column electrode 48b is disposed on the lower surface of the shape holding layer 46, as shown in FIG. 3, then the actuator 22 may be flexibly displaced in one direction so as to be convex toward the recess 34, as shown in FIG. 1. Alternatively, the actuator 22 may be flexibly displaced so as to be convex toward the optical waveguide panel 20, as shown in FIG. 4. In the example shown in FIG. 4, the pillars 42 themselves have a light blocking capability, with no gap forming layers 44 disposed between the pillars 42 and the optical waveguide panel 20.

As shown in FIG. 3, the pixel assembly 30 is constructed as a laminated body disposed as a displacement transfer element on the actuator 22 and comprising a white scattering body 50, a color filter 52, and a transparent layer 54. The color filter 52 may be replaced with a colored scattering body.

As shown in FIGS. 1, 3, and 4, the pillars 42 are disposed between the optical waveguide panel 20 and the actuator board 32 and positioned around the pixel assemblies 30. In the example shown in FIG. 4, the optical waveguide panel 20 is directly fixed to the upper surfaces of the pillars 42. The pillars 42 should preferably be made of a material which is resistant to deformation when subjected to heat and pressure.

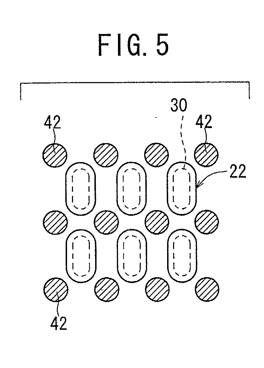

As shown in FIG. 5, the pillars 42 may be disposed at respective four corners around each of the pixel assemblies 30. Specifically, if each of the pixel assemblies 30 is substantially of a rectangular or elliptical shape when viewed in plan, then the pillars 42 are disposed in the respective four corners around the pixel assembly 30, with one of the pillars 42 being shared by adjacent pixel assemblies 30.

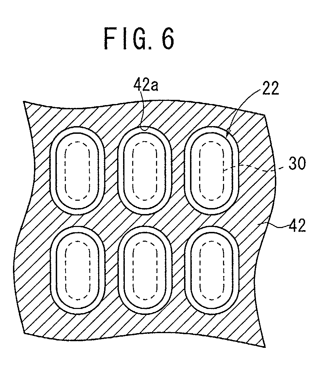

Alternatively, as shown in FIG. 6, a single pillar 42 may have windows 42a defined therein which accommodates the respective pixel assemblies 30. Specifically, the single pillar 42 is in the form of a plate, and the windows (openings) 42 complementary in shape to the pixel assemblies 30 are defined in the single pillar 42 at respective positions aligned with the pixel assemblies 30. With the arrangement shown in FIG. 6, the pixel assemblies 30 have their side surfaces surrounded by the pillar 42, which provides increased bonding strength between the actuator board 32 and the optical waveguide panel 20.

The components of the display element 14, particularly materials of the components of the display element 14, will be described below.

Light 18 introduced into the optical waveguide panel 20 may be radiation in the ultraviolet, visible, or visible range. The light source 16 may comprise an incandescent lamp, a deuterium discharge lamp, a fluorescent lamp, a mercury lamp, a metal halide lamp, a halogen lamp, a xenon lamp, a tritium lamp, a light-emitting diode, a laser, a plasma light source, a hot cathode-ray tube (or a cathode-ray tube with a carbon nanotube field emitter used in place of a filamentary hot cathode), or a cold cathode-ray tube.

The vibrator 38 should preferably be made of a highly heat-resistant material for the reason that the vibrator 38 is not modified when at least the shape holding layer 46 is formed if the vibrator 38 is directly supported by the stationary block 40 without using a material of poor heat resistance such as an organic adhesive or the like.

The vibrator 38 should preferably be made of an electrically insulating material in order to provide an electric isolation between an interconnection leading to the row electrode 48a on the actuator board 32 and an interconnection (e.g., a data line) leading to the column electrode 48b.

Therefore, the vibrator 38 may be made of a highly heat-resistant metal or a material such as an enamelled material where a surface of such a highly heat-resistant metal is covered with a ceramic material such as glass or the like. However, ceramics is optimum as the material of the vibrator 38.

The ceramics of the vibrator 38 may be stabilized zirconium oxide, aluminum oxide, magnesium oxide, titanium oxide, spinel, mullite, aluminum nitride, silicon nitride, glass, or a mixture thereof. Stabilized zirconium oxide is particularly preferable because it provides high mechanical strength and high tenacity even if the thickness of the vibrator 38 is small and it has small chemical reactivity with the shape holding layer 46 and the electrodes 48. Stabilized zirconium oxide includes both stabilized zirconium oxide and partially stabilized zirconium oxide. Stabilized zirconium oxide does not cause a phase transition because it has a crystalline structure such as a cubic structure or the like.

Zirconium oxide causes a phase transition in a monoclinic structure and a tetragonal structure at about 1000°C, and may crack upon such a phase transition. Stabilized zirconium oxide contains 1 - 30 mol % of calcium oxide, magnesium oxide, yttrium oxide, scandium oxide, ytterbium oxide, cerium oxide, or an oxide of a rare earth metal. If stabilized zirconium oxide contains yttrium oxide, then it should preferably contain 1.5 to 6 mol % of yttrium oxide, or more preferably 2 to 4 mol % of yttrium oxide, and furthermore should preferably contain 0.1 to 5 mol % of aluminum oxide.

The crystalline phase of stabilized zirconium oxide may be a mixture of cubic and monoclinic systems, a mixture of tetragonal and monoclinic systems, or a mixture of cubic, tetragonal and monoclinic systems. Particularly, a mixture of cubic and monoclinic systems or a mixture of tetragonal and monoclinic systems is most preferable from the standpoint of strength, tenacity, and durability.

If the vibrator 38 is made of ceramics, then it is constructed of many crystal grains. In order to increase the mechanical strength of the vibrator 38, the average diameter of the crystal grains should preferably be in the range from 0.05 to 2 $\mu$m and more preferably in the range from 0.1 to 1 $\mu$m.

The stationary block 40 should preferably be made of ceramics. The stationary block 40 may be made of ceramics which is the same as or different from the ceramics of the vibrator 38. As with the material of the vibrator 38, the ceramics of the stationary block 40 may be stabilized zirconium oxide, aluminum oxide, magnesium oxide, titanium oxide, spinel, mullite, aluminum nitride, silicon nitride, glass, or a mixture thereof.

The actuator board 32 is made of a material containing zirconium oxide as a chief component, a material containing aluminum oxide as a chief component, or a material containing a mixture of zirconium oxide and aluminum oxide as a chief component. Particularly preferable is a material chiefly containing zirconium oxide.

Clay or the like may be added as a sintering additive. Components of such a sintering additive need to be adjusted so that the sintering additive does not contain excessive amounts of materials which can easily be vitrified, e.g., silicon oxide, boron oxide, etc. This is because while these easily vitrifiable materials are advantageous in joining the actuator board 32 to the shape holding layer 46, they promote a reaction between the actuator board 32 and the shape holding layer 46, making it difficult to keep the desired composition of the shape holding layer 46 and resulting in a reduction in the device characteristics.

Specifically, the easily vitrifiable materials such as silicon oxide in the actuator board 32 should preferably be limited to 3 % by weight or less or more preferably to 1 % by weight or less. The chief component referred to above is a component which occurs at 50 % by weight or more.

The shape holding layer 46 may be in the form of a piezoelectric/electrostrictive layer or an anti-ferrodielectric layer, as described above. If the shape holding layer 46 comprises a piezoelectric/electrostrictive layer, then it may be made of ceramics containing, singly or in combination, lead zirconate, lead magnesium niobate, lead nickel niobate, lead zinc niobate, lead manganese niobate, lead magnesium tantalate, lead nickel tantalate, lead antimony tinate, lead titanate, barium titanate, lead manganese tungstenate, and lead cobalt niobate.

The chief component may contain 50 % by weight or more of one of the above compounds. The ceramics containing lead zirconate is the most frequently used material of the piezoelectric/electrostrictive layer as the shape holding layer 46.

If the piezoelectric/electrostrictive layer is made of ceramics, then an oxide of lanthanum, calcium, strontium, molybdenum, tungsten, barium, niobium, zinc, nickel, manganese, or the like, or a combination thereof, or other compounds, may be added to the ceramics.

For example, the piezoelectric/electrostrictive layer may be made of ceramics containing a chief component made up of lead magnesium niobate, lead zirconate, and lead titanate, and further containing lanthanum and strontium.

The piezoelectric/electrostrictive layer may be dense or porous. If the piezoelectric/electrostrictive layer is porous, then the porosity should preferably be 40 % or less.

If the shape holding layer 46 comprises an anti-ferrodielectric layer, then it should preferably made of a material containing lead zirconate as a chief component, a material containing lead zirconate and lead tinate as a chief component, a material containing lead zirconate with lanthanum oxide added thereto, or a material containing a component of lead zirconate and lead tinate with lead zirconate and lead niobate added there-

to.

If an anti-ferrodielectric film containing a component of lead zirconate and lead tinate having the following composition is used as a film-type device such as the actuator 22, then such an anti-ferrodielectric film is particularly preferable because it can be driven at a relatively low voltage:

$$Pb_{0.99}Nb_{0.02}[(Zr_xSn_{1-x})_{1-y}Ti_y]_{0.98}O_3]$$

where $0.5 < x < 0.6$, $0.05 < y < 0.063$, $0.01 < Nb < 0.03$.

The anti-ferrodielectric film may be porous. If the anti-ferrodielectric film is porous, then the porosity should preferably be 30 % or less.

The shape holding layer 46 may be formed on the vibrator 38 by a screen printing process, any of various thick film forming processes including a dipping process, a coating process, and an electrophoresis process, or any of various thin film forming processes including an ion beam process, a sputtering process, a vacuum evaporation process, an ion plating process, a chemical vapor deposition (CVD) process, plating, etc.), and a plating process.

In the present embodiment, the shape holding layer 46 is preferably formed on the vibrator 38 by a screen printing process or any of various thick film forming processes including a dipping process, a coating process, and an electrophoresis process.

According to these processes, the shape holding layer 46 can be formed using a paste, a slurry, or a suspension, an emulsion, or a sol which is mainly composed of particles of piezoelectric ceramics having an average particle diameter ranging from 0.01 to 5 μm, preferably from 0.05 to 3 μm, and good piezoelectric properties can be achieved by the shape holding layer 46 thus formed.

Especially, the electrophoresis process is capable of forming films at a high density with a high shape accuracy, and also has such features as described in "Electrochemistry and Industrial physical chemistry", Vol. 53, No. 1 (1985), pages 63 - 68, written by Kazuo Anzai, and "Process of forming high-order ceramics according to electrophoresis, 1st research forum", collected preprints (1998), pages 5-6, pages 23 - 24. One of the processes should be selected in view of the required accuracy and reliability.

The thickness of the vibrator 38 and the thickness of the shape holding layer 46 should preferably be of substantially the same level. If the thickness of the vibrator 38 were extremely larger than the thickness of the shape holding layer 46 by at least ten times, then since the vibrator 38 would work to prevent the shape holding layer 46 from shrinking when it is baked, large stresses would be developed in the interface between the shape holding layer 46 and the actuator board 32, making the shape holding layer 46 easy to peel off the actuator board 32. If the thickness of the vibrator 38 is substantially the same as the thickness of the shape holding layer 46, the actuator board 32 (the vibrator 38) is easy to follow the shape holding layer 46 as it shrinks when it is baked, allowing the vibrator 38 and the shape holding layer 46 to be appropriately combined with each other. Specifically, the thickness of the vibrator 38 should preferably be in the range from 1 to 100 μm, more preferably in the range from 3 to 50 μm, and even more preferably in the range from 5 to 20 μm. The thickness of the shape holding layer 46 should preferably be in the range from 5 to 100 μm, more preferably in the range from 5 to 50 μm, and even more in the range from 5 to 30 μm.

The row electrode 48a and the column electrode 48b disposed respectively on the upper and lower surfaces of the shape holding layer 46 or disposed on one of the upper and lower surfaces of the shape holding layer 46 should preferably have a thickness ranging from 0.01 to 50 μm and more preferably have a thickness ranging from 0.1 to 5 μm. The row electrode 48a and the column electrode 48b should preferably be made of an electrically conductive metal which is solid at room temperature. For example, the row electrode 48a and the column electrode 48b may be made of a metal such as aluminum, titanium, chromium, iron, cobalt, nickel, copper, zinc, niobium, molybdenum, ruthenium, rhodium, silver, tin, tantalum, tungsten, iridium, platinum, cold, lead, etc., singly or as an alloy. The row electrode 48a and the column electrode 48b may contain any of the above elements in a desired combination.

The optical waveguide panel 20 has an optical refractive index selected to cause all the light 18 introduced therein to be totally reflected within the optical waveguide panel 20 without passing through front and rear surfaces thereof, and is required to provide a uniform and high level of transmittance in the wavelength range of the light 18. The optical waveguide panel 20 may be made of any materials Insofar as they meet the above requirements. Generally, the optical waveguide panel 20 may be made of glass, quartz, a light-transmissive plastic material such as acrylic resin or the like, a light-transmissive ceramic material, or the like, or may comprise a structural body of plural layers made of materials having different refractive indexes, or may comprise a body with a coating layer disposed on its surface.

The colored layers including the color filter 52 and the colored scattering body in the pixel assembly 30 are layers for extracting light in a certain wavelength range, and may comprise layers for absorbing, passing, reflecting, or scattering light in a certain wavelength range or convert light in a certain wavelength range into light in another wavelength range. The colored layers may be transparent, semitransparent, or opaque layers used singly or in combination.

The colored layers may comprise color dyes or fluorescent materials such as dyes, pigments, ions, or the like which are dispersed or dissolved in rubber, organic resin, light-transmissive ceramics, glass, liquid, or the like or applied to their surfaces, or may comprise powders of the above color dyes or fluorescent materials which are sintered or pressed into solid bodies. The materials and structures of the colored layers may be used singly or in combination.

The colored layers including the color filter 52 and the colored scattering body may be formed by any of various known film forming processes. For example, a chip-like or film-like colored layer may be directly applied to the surface of the optical waveguide panel 20 or the actuator 22. Alternatively, a powder, a paste, a liquid, a gas, ions, or the like which serves as the material of the colored layers may be converted into a film as a colored layer by a thin film forming process such as a screen printing process, a photographic process, a spraying process, a dipping process, a coating process, or the like, or a thin film forming process such as an ion beam process, a sputtering process, a vacuum evaporation process, an ion plating process, a CVD process, a plating process, or the like.

The pixel assembly 30 may include a light-emitting layer in its entirety or in a portion thereof. The light-emitting layer may comprise a fluorescent layer which emits visible light when stimulated by invisible light (ultraviolet radiation or infrared radiation) or emits invisible light when stimulated visible light.

The light-emitting layer may be made of a fluorescent pigment. If the light-emitting layer is made of a fluorescent pigment, then when fluorescence in a wavelength which is substantially equal to the wavelength of the color of the pigment itself, i.e., the reflected color, is applied to the fluorescent pigment, the fluorescent pigment causes as much color stimulus and emits as bright color. Therefore, fluorescent pigments, particularly general daylight fluorescent pigments, are preferably used for increasing the luminance of display elements and display units.

The light-emitting layer may also be made of a stimulable fluorescent material, a phosphorous material, or a luminous pigment. These materials may be organic or inorganic.

The light-emitting layer may be made of any of the above light-emitting materials singly, or any of the above light-emitting materials which is dispersed in a resin, or any of the above light-emitting materials which is dissolved in a resin.

The afterglow time of the light-emitting materials should preferably be 1 second or shorter, more preferably 30 milliseconds or shorter, or even more preferably several milliseconds or shorter.

If the pixel assembly 30 includes the above light-emitting layer in its entirety or in a portion thereof, then the light source 16 may comprise any light sources insofar as they emit light having a wavelength capable of stimulating the light-emitting layer and an energy density sufficient for stimulating the light-emitting layer. For example, the light source 16 may comprise a cold cathode-ray tube, a hot cathode-ray tube (or a cathode-ray tube with a carbon nanotube field emitter used in place of a filamentary hot cathode), a metal halide lamp, a xenon lamp, a laser including an infrared laser, a black light, a halogen light, an incandescent lamp, a deuterium discharge lamp, a fluorescent lamp, a mercury lamp, a tritium lamp, a light-emitting diode, a plasma light source, or the like.

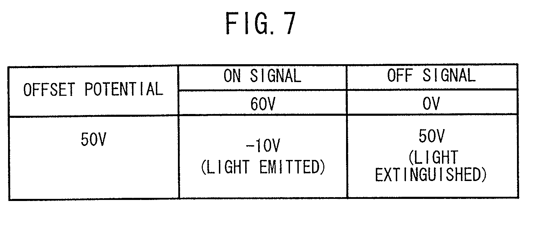

Operation of the display element 14 will briefly be described below with reference to FIG. 1. In operation, as shown in FIG. 7, an offset voltage of 50 V, for example, is applied to the row electrode 48a of each of the actuators 22, and an on-signal of 60 V and an off-signal of 0 V, for example, are applied to the column electrode 48b of each of the actuators 22.

Therefore, in those actuators 22 where the on signal is applied to the column electrode 48b, a low level voltage of - 10 V is applied between the column electrode 48b and the row electrode 48a, and in those actuators 22 where the off signal is applied to the column electrode 48b, a high level voltage of 50 V is applied between the column electrode 48b and the row electrode 48a.

Light 18 is introduced into the optical waveguide panel 20 from an end thereof, for example. The optical waveguide panel 20 has its refractive index pre-adjusted to cause all the light 18 to be totally reflected within the optical waveguide panel 20 without passing through front and rear surfaces thereof while the pixel assemblies 30 are not in contact with the optical waveguide panel 20. The refractive index of the optical waveguide panel 20 is preferably in the range from 1.3 to 1.8, and more preferably from 1.4 to 1.7.

In the present embodiment, while the actuators 22 are in their free state, since the end faces of the pixel assemblies 30 are held in contact with the rear surface of the optical waveguide panel 20 by a distance equal to or smaller than the wavelength of the light 18, the light 18 is reflected by the end faces of the pixel assemblies 30 and becomes scattered light 62. The scattered light 62 is partly reflected in the optical waveguide panel 20, but mostly passes through the front surface of the optical waveguide panel 20 without being reflected therein. All the actuators 22 are in the on state, emitting light in a color corresponding to the color of the color filters 52, the colored scattering bodies, or the light-emitting layers in the pixel assemblies 30. Because all the actuators 22 are in the on state, a white color is displayed on the screen of the display element 14.

When an off signal is applied to the actuator 22 corresponding to a certain dot 26, the actuator 22 is flexibly displaced so as to be convex into the cavity 34, spacing the end face of the pixel assembly 30 away from the optical waveguide panel 20. The actuator 22 is now turned off, extinguishing the light which has been emitted.

Therefore, the display element 14 controls light emission (light leakage) on the front surface of the optical waveguide panel 20 depending on whether the pixel assemblies 30 contact the optical waveguide panel 20 or not.

In the display element 14, two actuators 22 each for displacing the pixel assembly 30 toward and away from the optical waveguide panel 20 are arrayed in a vertical direction and make up a single dot 26, and three dots 26 including a red dot 26R, a green dot 26G, and a blue dot 26B which are arrayed in a horizontal direction make up a single pixel 28. The pixels 28 of the display element 14 are arranged in a matrix or may be arranged in staggered rows. When the displacement of the pixel assemblies 30 in the respective pixels is controlled depending on the attributes of an image signal applied to the display element 14, the display element 14 can display a color image (characters, graphic patterns, etc.) depending on the image signal on the front surface of the optical waveguide panel 20, i.e., the display screen of the display element 14, as is the case with cathode-ray tubes, liquid crystal display panels, plasma display panels, etc.

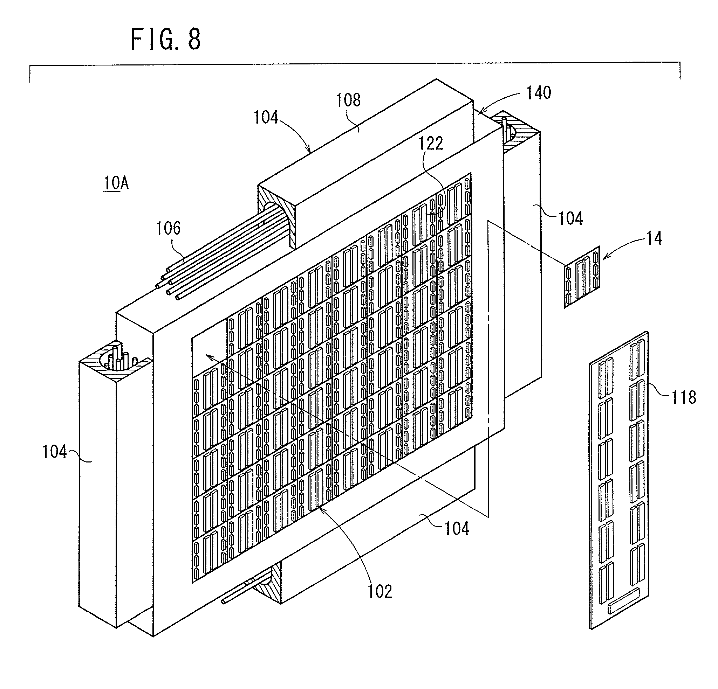

As shown in FIG. 8, a display apparatus 10A according to a first embodiment of the present invention has a display apparatus body 102 including a matrix of display elements 14 disposed on a principal surface of a large-size light guide panel 140. Light sources 104 are mounted on respective outer side surfaces of the large-size light guide panel 140. Each of the light sources 104 comprises a number of cold cathode-ray tubes 106 and a reflector 108 for reflecting light from the cold cathode-ray tubes 106 toward the large-size light guide panel 140.

In FIG. 8, the light from the cold cathode-ray tubes 106 is introduced through end faces thereof into the large-size light guide panel 140 and the optical waveguide panels 20 of the respective display elements 14. However, the light from the cold cathode-ray tubes 106 may be introduced into the large-size light guide panel 140 and the optical waveguide panels 20 of the respective display elements 14 through end faces of those optical waveguide panels 20 which are disposed in outer peripheral edges of the large-size light guide panel 140 as well as the end faces of the large-size light guide panel 140.

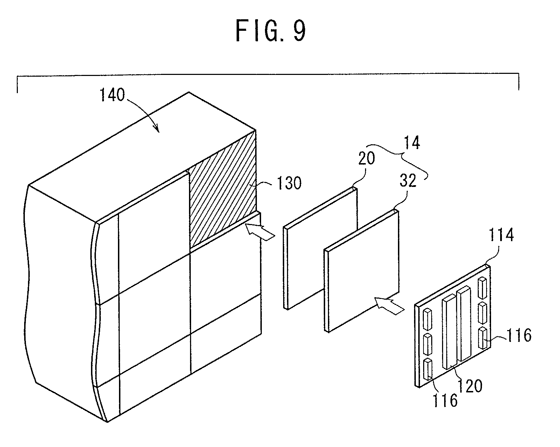

As shown in FIG. 9, a wiring board 114 is mounted on the reverse side of the actuator board 32 of each of the display elements 14. The wiring board 114 has a plurality of drive ICs 116 for driving the row electrode 48a and the column electrode 48b of the display element 14, and connectors 120 connecting the drive ICs 116 to a driver board 118 (see FIG. 8) which processes signals to be applied to groups of the drive ICs 116. The driver board 118 is connected to a display controller (not shown) for processing image data for the display of images on the display apparatus 10A.

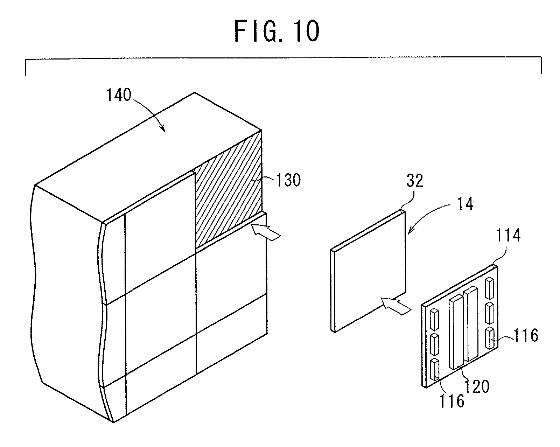

In FIG. 9, the display element 14 which has the optical waveguide panel 20 and the actuator board 32 and the wiring board 114 are attached to the large-size light guide panel 140. However, as shown in FIG. 10, the display element 14 which is free of the optical waveguide panel 20 and the wiring board 114 may be attached to the large-size light guide panel 140. In the example shown in FIG. 10, the large-size light guide panel 140 itself serves as a component of the display element which functions as the optical waveguide panel 20.

As shown in FIG. 9, the display apparatus 10A according to the first embodiment includes a light-transmissive substrate 130 whose refractive index has been adjusted, interposed at least between the large-size light guide panel 140 and the display elements 14.

The refractive index of the substance 130 should preferably be as close to the refractive index of the large-size light guide panel 140 as possible. An allowable difference between the refractive index of the large-size light guide panel 140 and the refractive index of the substance 130, which is related to the thickness of the large-size light guide panel 140, should preferably satisfy the following condition:

$$0.9N_1 \leq N_2 \leq 1.1N_1$$

where $N_1$ is the thickness of the large-size light guide panel 140 and $N_2$ is the refractive index of the substance 130.

If $0.99N_1 \leq N_2 \leq 1.01N_1$, then the thickness of the large-size light guide panel 140 can be increased, thus increasing the stability of the large-size light guide panel 140 as a structural body.

The light transmittance of the substance 130 with respect to incident light applied perpendicularly thereto in the visible wavelength range should preferably be 50 % or higher, or more preferably be 70 % or higher, in order to introduce light efficiently into the display elements 14 and reduce the power consumption.

The substrate 130 may be in any phase such as a gas, a liquid, a solid, or a mixture thereof insofar as it satisfies the above condition.

The large-size light guide panel 140 may be made of an organic material or an inorganic material insofar as it has a good light transmittance in the visible wavelength range. Specifically, the large-size light guide panel 140 may be made of glass, quartz, light-transmissive alumina, acrylic resin, methacrylic resin, polycarbonate, vinyl chloride, phenolic resin, vinyl acetate, ABS, fluoroplastics, unsaturated polyester, or the like, either singly or in combination. If the large-size light guide panel 140 is made of glass, then it should preferably be made of Vycor glass, 96 % silicate glass, aluminosilicate glass, borosilicate glass, zinc borosilicate glass, barium borosilicate glass, or the like. The light transmittance of the large-size light guide panel 140 with respect to incident light applied perpendicularly thereto in the visible wavelength range should preferably be 50 % or higher, or more preferably be 70 % or higher.

The substance 130 may comprise an adhesive having a refractive index which is substantially the same as the refractive indexes of the optical waveguide panels 20 of the display elements 14 and the large-size light guide panel 140. The adhesive for use as the substance 130 may include a pressure-sensitive adhesive, an adhesive which is solidified after being cured, an adhesive which is flexible after being cured, a rubber-like adhesive, and a gel-like adhesive.

The adhesive may be cured by any of various curing processes including a UV curing process, a heated curing process, a normal-temperature curing process, a condensation curing process, an addition curing process, a two-part curing process, etc.

The adhesive may be made of an organic material or an inorganic material insofar as it has a good light transmittance in the visible wavelength range. The adhesive should preferably be made of a material which is highly insulative and has a low ignition point, and more preferably of a material which has excellent wettability with respect to the large-size light guide panel 140 and is stable over a long period of time with respect to heat, light, and humidity.

Specifically, the adhesive comprises a urea resin adhesive, a phenolic resin adhesive, an epoxy resin adhesive, an acrylic resin adhesive, a methacrylic resin adhesive, a cyanoacrylate adhesive, a polyurethane adhesive, an emulsion adhesive, a hot-melt adhesive, a synthetic rubber adhesive, a natural rubber adhesive, or the like, either singly or in combination.

If an adhesive which is fully solidified is used as the adhesive of the substance 130, then since the display elements 14 are firmly bonded by the adhesive, the display apparatus 10A is of high mechanical strength. However, any defective display elements 14 cannot easily be replaced individually with a new one, the display apparatus 10A thus constructed should be replaced in its entirety.

If an adhesive which is flexible is used as the adhesive of the substance 130, then the display apparatus 10A is of high mechanical strength and can easily be cut off. Therefore, any defective display elements 14 can easily be replaced individually with a new one, and hence the display apparatus 10A is highly reparable.

A process of manufacturing the display apparatus 10A according to the first embodiment will be described below. First, the surface of the large-size light guide panel 140 is treated. Specifically, the surface of the large-size light guide panel 140 is coated with a hard coating material. The surface of the large-size light guide panel 140 thus coated is prevented from being scratched, so that the display apparatus 10A is prevented from producing local white dots when a black image is displayed thereon and also from having an overall increase in its luminance.

The surface of the large-size light guide panel 140 is coated with a hard coating material by forming a film of a material harder than the material of the large-size light guide panel 140 on the surface of the large-size light guide panel 140. While it is important to coat both face and reverse sides of the large-size light guide panel 140 for preventing them from being scratched, end faces thereof do not necessarily need to be coated. The hard coating material may be an acrylic hard coating material or a silicone hard coating material.

Then, the end faces of the optical waveguide panels 20 of the display elements 14 are polished to a mirror finish. The mirror-finish end faces of the optical waveguide panels 20 are effective to lower any light leakage from the joints therebetween to an annoyance-free level, making the joints almost visibly inappreciable. Since the mirror-finish end faces of the optical waveguide panels 20 allow the light from the light source 104 to reach the large-size light guide panel 140, a desired angle of view can be achieved. In polishing the end faces of the optical waveguide panels 20 to a mirror finish, it is preferable to reduce Rmax to 0.3 or less, or 0.05 or less more preferably, to reduce any light leakage from the joints therebetween to an annoyance-free level.

In machining the optical waveguide panel 20, the dimensional accuracy thereof should preferably be ± 0.1 mm or less with respect to a reference dimension 100 mm, the squareness between end faces and the squareness between end faces and surfaces should preferably be 0.1 mm or less, and the parallelism between end faces and the parallelism between surfaces should preferably be 0.1 mm or less. The dimensional accuracy thereof should more preferably be ± 0.03 mm or less with respect to a reference dimension 100 mm, the squareness between end faces and the squareness between end faces and surfaces should more preferably be 0.03 mm or less, and the parallelism between end faces and the parallelism between surfaces should more preferably be 0.03 mm or less.

With the optical waveguide panels 20 thus machined, an accumulated pitch error produced when the display elements 14 are successively arrayed in position is reduced. As a result, the distortion of display images due to pixel pitch shifts is reduced reducing variations in the gaps of the joints and also reducing variations in the thicknesses of the optical waveguide panels 20. The joints are thus made less visually perceptible by satisfying the above machining conditions.

The pitch of the pixels of the display elements 14 should preferably match the distance between the pixels at the joints between the display elements 14, thus eliminating the difference between the pixel pitch in the display elements 14 and the pixel pitch at the joints between the display elements 14 for thereby reducing image distortions.

Then, the display elements 14 are successively arrayed and fixed in position on the principal surface of the large-size light guide panel 140. At this time, the large-size light guide panel 140 and the optical waveguide panels 20 of the display elements 14 are held in confronting relation to each other, and an adhesive which is either fully solidified (e.g., Benefix VL or Benefix α manufactured by Adel or a flexible adhesive is applied between the large-size light guide panel 140 and the optical waveguide panels 20. After the large-size light guide panel 140 and the optical waveguide panels 20 are joined to each other, the adhesive is cured.

The actuator board 32 of each of the display elements 14 may be warped due to shrinkage caused when it is baked, and the display device 14 may also be warped in its entirety due to the warpage of the actuator board 32.

However, since the display elements 14 are fixed to the large-size light guide panel 140 by the adhesive, the entire principal surface (display surface) of the optical waveguide panel 20 is fixed to the large-size light guide panel 140 by the adhesive. Any warpage of the display element 14 is absorbed by the adhesive, allowing the display element 14 to be firmly fixed to the large-size light guide panel 140.

The substance 130 interposed between the large-size light guide panel 140 and the display elements 14 may comprise a matching oil rather than the adhesive. The matching oil is in a liquid or grease phase, and may be an organic material or an inorganic material insofar as it has a good light transmittance in the visible wavelength range. The matching oil should preferably be a material which has excellent wettability with respect to the large-size light guide panel 140 and is stable over a long period of time with respect to heat, light, and humidity. Specifically, the matching oil may be dimethyl silicone oil, methylphenyl silicone oil, glycerin, di-2-ethylhexyl phthalate, silicone grease, optical gel, or the like.

If the matching oil is in a liquid phase, then it should have a viscosity in the range from 100 to 1000 cSt to allow air bubbles from being removed with ease when it is applied and also to prevent the matching oil from flowing and sagging too much.

Use of the matching oil is not significantly effective to absorb warpage of the display elements 14, but makes the display apparatus highly reparable for easy replacement of any defective display elements 14.

Then, the driver board 118 is attached to the wiring boards 114 of the display elements 14 and electrically connected thereto. In this manner, the display apparatus 10A according to the first embodiment is completed.

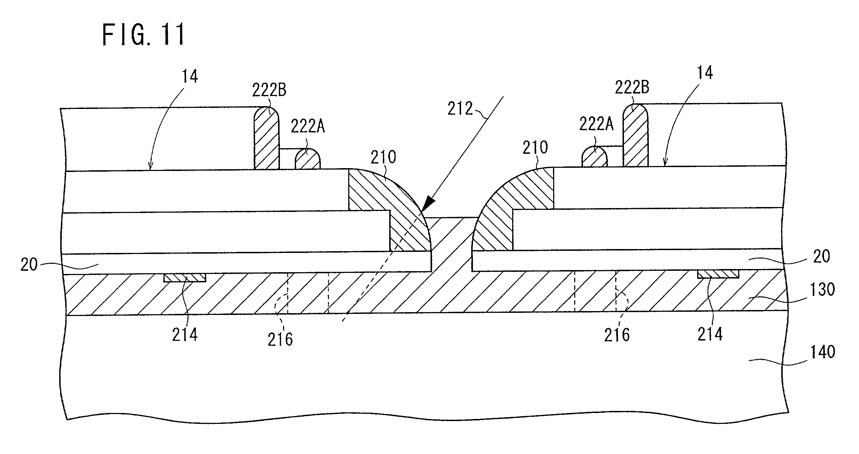

Before the display elements 14 are bonded to the large-size light guide panel 140, a light absorbing member 210 may be disposed around each of the display elements 14 as shown in FIG. 11. The light absorbing member 210 is effective to reduce leakage light 212 applied to the large-size light guide panel 140 from behind the display elements 14, thus making the joints between the display elements 14 less annoying to the eye and increasing the contrast of displayed images.

The light absorbing member 210 may also be used as a sealing member for sealing the peripheral edges of each of the display elements 14. The light absorbing member 210 doubling as the sealing member prevents the matching oil or the adhesive as the substance 130 disposed between the large-size light guide panel 140 and the display elements 14 from entering the display elements 14, thus preventing the quality of displayed images from being lowered.

The light absorbing member 210 doubling as the sealing member may made of a mixture of an epoxy adhesive, a fine silica powder, and a black pigment or dye. The epoxy adhesive has a function to increase the adhesion of the light absorbing member 210 to the display elements 14 (adhesiveness). The fine silica powder has a function to keep the light absorbing member 210 in its shape (non-flowability). The black pigment or dye has a function to absorb leakage light (light absorption). The fine silica powder should preferably have a particle diameter ranging from 0.1 to 10 μm and more preferably from 1 to 5 μm.

The ratio of the epoxy adhesive, the fine silica powder, and the black pigment or dye of the light absorbing member 210 is preferably represented by 1 : 0.5 - 2 : 0.005 - 0.1 or more preferably 1 : 1.4 - 1.8 : 0.01 - 0.05. Any of a silicone adhesive, a modified silicone adhesive, a polysulfide adhesive, a polyurethane adhesive, an acrylic adhesive, an epoxy adhesive, an SBR adhesive, and a butyl rubber adhesive may be used instead of the epoxy adhesive. A fine resin powder, a fine ceramic power, a fine carbon powder, or the like may be used instead of the fine silica powder.

The surface of the light absorbing member 210 should preferably be coated with a repellant oil such as silicone oil, fluorine oil, or the like for repelling the substance 130 and preventing the substance 130 from being deteriorated.

The light absorbing member 210 may be formed by a printing process, a dispenser, or a stamping process.

Before the display elements 14 are bonded to the large-size light guide panel 140, a light absorbing layer 214 should preferably be applied to an area that appears as a bright defect as shown in FIG. 11. The bright defect is an area which is visually recognized as a white dot when a black image or a dark background is displayed by the display apparatus. A light spot caused by such a bright defect is absorbed by the light absorbing layer 214, making the bright defect less visually perceptible.

The bright defect may be caused by the contact of the upper surface of the pixel assembly 30 with the optical waveguide panel 20 at all times due to a failure of the actuator 22 to be displaced, a defect present in the optical waveguide panel 20 which is a component of the display element 14 or a defect present in the large-size light guide panel 140, or foreign matter mixed with the substance 130.

For applying the light absorbing layer 214 to an area that appears as a bright defect, the display surface of the display element 14 is visually checked with a microscope or measured with a luminance meter while the display element 14 is being energized, and the position of a bright defect is detected based on the visually checked information or the luminance information. Then, the light absorbing layer 214 is applied to an area corresponding to the detected bright defect in the surface of the optical waveguide panel 20, using an applicator. Alternatively, the light absorbing layer 214 may be applied manually while the display surface of the display element 14 is being visually checked with a microscope or measured with a luminance meter.

In FIG. 11, the light absorbing layer 214 is applied to the optical waveguide panel 20 of each of the display elements 14. However, the light absorbing layer 214 may be applied to the surface of the large-size light guide panel 140 which confronts each of the display elements 14.

A bright defect based on a defect in the large-size light guide panel 140 may be concealed by applying the light absorbing layer 214 to the display surface of the large-size light guide panel 140.

The light absorbing layer 214 should preferably be made of a material which scatters less light and will not be degraded in contact with the substance 130 such as a matching oil, an adhesive, or the like, and may be made of a resin containing a black pigment or dye or a metal film. The material of the light absorbing layer 214 should preferably be of good affinity with respect to the base (the optical waveguide panels 20 and the large-size light guide panel 140), and have good bondability to the base.

The light absorbing layer 214 should preferably have a thickness in the range from 0.1 to 100 $\mu$m, or more preferably from 1 to 50 $\mu$m. The light absorbing layer 214 may be applied by a printing process, a dispenser, a stamping process, or a photolithographic process.

Preferred arrangements of the display device 14 will be described below. According to a first arrangement, as shown in FIGS. 11 through 12C, projections 216 are disposed on the surface of the optical waveguide panel 20 which faces the large-size light guide panel 140.

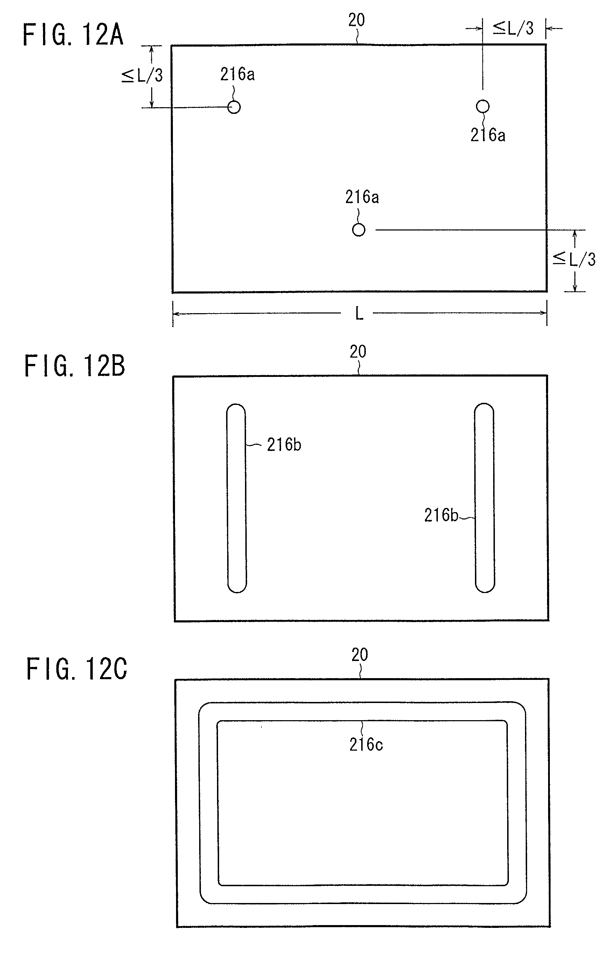

The projections 216 may be dot-like projections 216a as shown in FIG. 12A, two strip-like projections 216b as shown in FIG. 12B, or a frame-like projection 216c as shown in FIG. 12C.

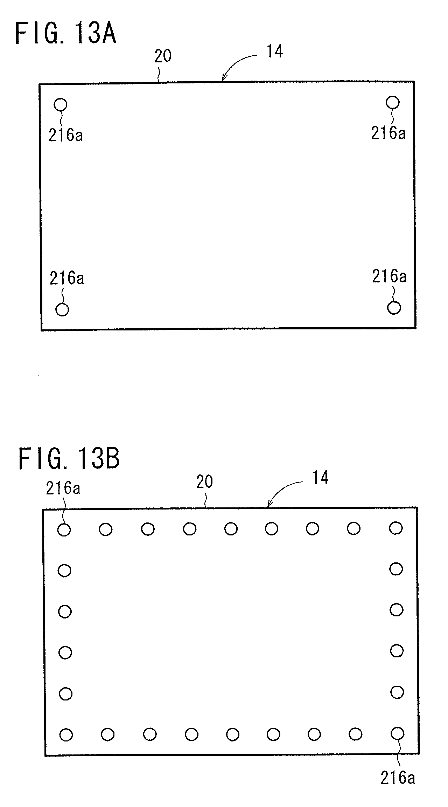

If the projections 216 comprise dot-like projections 216a, then they should preferably be at least three dot-like projections as shown in FIG. 12A. Specifically, four dot-like projections 216a may be disposed respectively on four corners of the optical waveguide panel 20, as shown in FIG. 13A, or a number of dot-like projections 216a may be arranged along the sides of the optical waveguide panel 20, as shown in FIG. 13B.

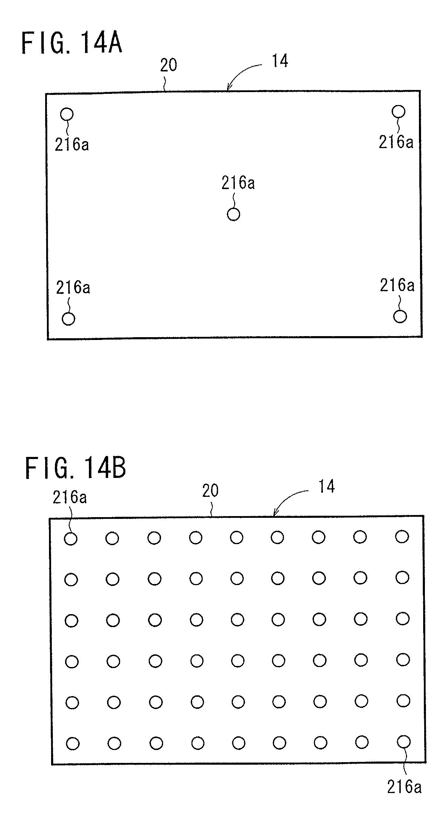

Alternatively, as shown in FIG. 14A, four dot-like projections 216a may be disposed respectively on four corners of the optical waveguide panel 20, and another dot-like projection 216a may be disposed at the center of the optical waveguide panel 20. As shown in FIG. 14B, a number of dot-like projections 216a may be arranged in a matrix. If the number of dot-like projections 216a is small, then the flowability of the substance 130 such as a matching oil or the like is increased, and local surface irregularities of the large-size light guide panel 140 and foreign matter mixed with the substance 130 such as a matching oil or the like are less influential. If the number of dot-like projections 216a is large, then they can scatter stresses applied when the large-size light guide panel 140 is deformed.

If the projections 216 comprise strip-like projections, a single strip-like projection may be employed. However, it is preferable to use two strip-like projections 216b spaced from each other, as shown in FIG. 12B.

According to a second arrangement, although not shown, three or more projections 216 are disposed on the surface of the large-size light guide panel 140 which faces the display element 14 and within a region corresponding to one display element 14.

In these arrangements, if the dot-like projections 216a are employed, then the three or more dot-like projections 216a should preferably be spaced from the closest side of the display element 14 by a distance of L/3 or less where L represents the length of the longer sides of the display element 14, as shown in FIG. 12A.

The projections 216a should preferably be disposed in locations corresponding to the pillars 42 (see FIG. 1) in the display element 14. Even when pressing forces are applied to the projections 216a due to a deformation of the large-size light guide panel 140, the optical waveguide panel 20 is prevented from being deformed or damaged because the pressing forces are borne by the pillars 42, and light emitted from the pixel is prevented from being scattered in part by the projections 216a.

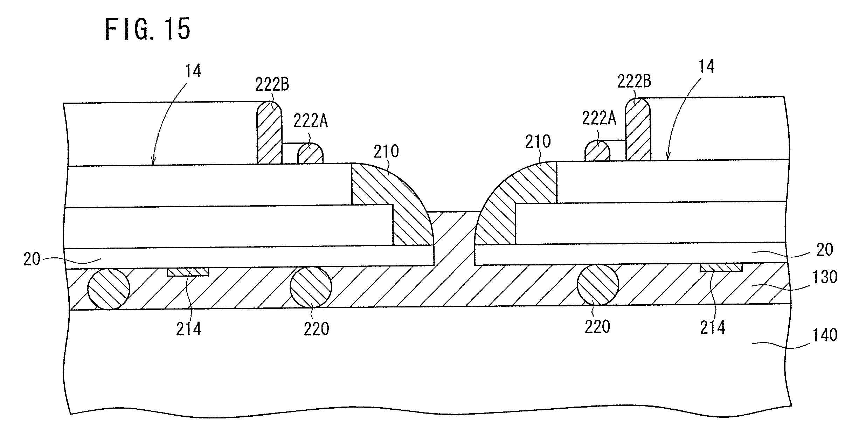

According to a third arrangement, as shown in FIG. 15, beads 220 are mixed with the substance 130 such as a matching oil or the like which is interposed between the large-size light guide panel 140 and the display elements 20. The beads 220 may be of a spherical shape, a cylindrical shape, a prismatic shape, or the like, but should preferably be of a spherical shape or a cylindrical shape. The beads 220 have a specific gravity which should preferably be equal to the specific gravity of the substance 130.

In the above display apparatus, the large-size light guide panel 140 may be warped due to the heat generated when the display elements are energized and also when light from the light source 16 is absorbed by the black matrix or the like. If the large-size light guide panel 140 is warped, then the internal pressure of the substance 130 which is present between the large-size light guide panel 140 and the display elements 14 which are bonded to the large-size light guide panel 140 differs between peripheral and central areas of the display elements 14.

Air bubbles then tend to be introduced into the region of the substance 130 where the internal pressure is lower. When air bubbles are present in the substance 130 between the display elements 14 and the large-size light guide panel 140, light passing from the display elements 14 through the substance 130 is applied to the air bubbles and scattered or refracted by the air bubbles, and visually recognized as light emitted from adjacent pixels, resulting in a cross-talk image or a black dot defect.

According to the first embodiment, however, the projections 216 formed on the optical waveguide panel 20 or the large-size light guide panel 140 or the beads 22 mixed with the substance 130 create a gap between the display elements 14 and the large-size light guide panel 140, allowing the substance 130 to flow well between the display elements 14 and the large-size light guide panel 140. As a result, even when a differential pressure is developed in the substance 130 due to a deformation of the large-size light guide panel 140 upon energization of the display apparatus, the substance 130 flows to reduce the differential pressure, preventing air bubbles from being introduced into the substance 130.

Inasmuch as the substance 130 has good flowability, the display elements 14 can easily be removed and repaired.

The projections 216 and the beads 220 should preferably have a good light transmittance in the visible wavelength range, and have a refractive index substantially equal to the refractive index of the substance 130. The projections 216 and the beads 220 should preferably have a height in the range from several μm to 1 mm and more preferably from 20 μm to 500 μm.

The projections 216 and the beads 220 may be made of an organic material or an inorganic material, and may be made of glass, quartz, light-transmissive alumina, acrylic resin, epoxy resin, silicone resin, methacrylic resin, polycarbonate, vinyl chloride, phenolic resin, vinyl acetate, ABS, fluoroplastics, unsaturated polyester, or the like, either singly or in combination, and should not swell in the material 130.

The projections 216 may be formed by bonding any of these materials or coating the surface with a liquid precursor and then curing the applied liquid precursor. According to the latter process, the precursor to the projections 216 should preferably be thixotropic in order to keep close contact with the base (the optical waveguide panels 20 and the large-size light guide panel 140) and the shape (height) of the projections 216.

If the projections 216 are made of a light absorbing material, they have a function as a black matrix to achieve increased contrast.

The projections 216 may be fabricated by forming the precursor to the projections 216 according to a printing process, a dispenser, or a stamping process, and then solidifying the precursor.

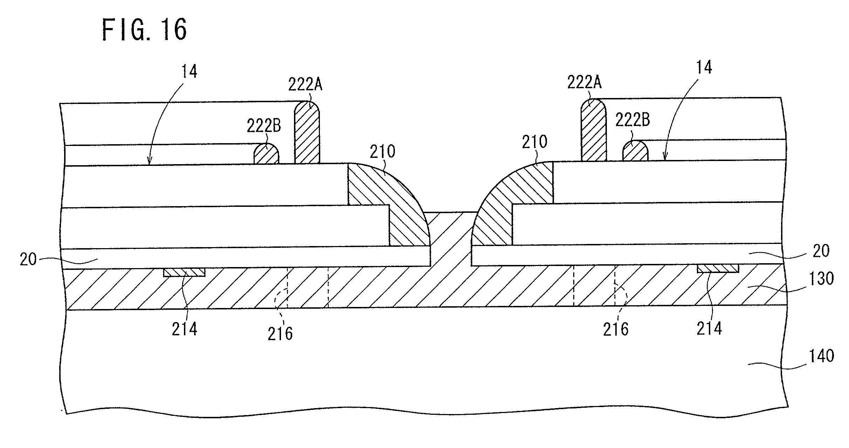

According to a fourth arrangement, banks 222A, 222B are disposed on the reverse side of the display elements 14 for preventing the substance 130 such as a matching oil, an adhesive, or the like present between the large-size liquid panel 140 and the display elements 14 from flowing onto the reverse side of the display elements 14. The banks 222A, 222B are formed along the peripheral edges of the display elements 14 on their reverse side. In FIGS. 11, 15, and 16, the two banks 222A, 222B are disposed on the reverse side of each of the display elements 14. The outer bank 222B may be lower and the inner bank 222B may be higher as shown in FIGS. 11 and 15, or the outer bank 222B may be higher and the inner bank 222B may be lower as shown in FIGS. 16.

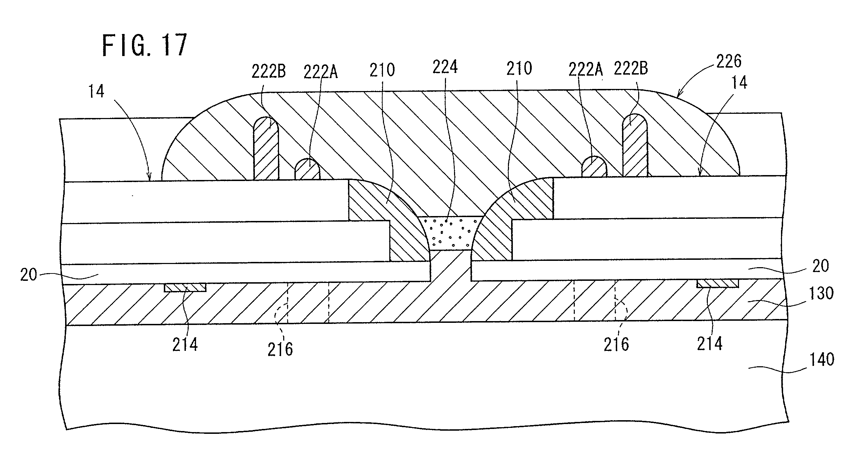

The plural banks 222A, 222B should preferably be provided to effectively prevent the substance 130 from flowing onto the reverse side of the display elements 14. With the plural banks 222A, 222B, if a sealing structure shown in FIG. 17 is employed, then when a second sealing member 226 enters between the banks 222A, 222B, air bubbles tend to remain therein, and tend to lower the quality of displayed images when they move onto the surface of the optical waveguide panels 20. It is thus important to make the heights of the banks 222A, 222B different from each other to allow the air bubbles to be easily discharged, as shown in FIGS. 11 and 16.

The banks 222A, 222B thus provided are effective to prevent the substance 130, which would impair the sealing capability of the second sealing member 226, from flowing onto the reverse side of the display elements 14 and thus prevent ICs mounted on the reverse side of the display elements 14 from being immersed in the substance 130. The display elements 14 can easily be removed by pulling up the banks 222A, 222B, and hence can easily be repaired.

The banks 222A, 222B may be made of a material such as silicone, epoxy resin, or the like which does not swell in the substance 130 and which should preferably be not flowable as they need to be high in shape.

The banks 222A, 222B should preferably be formed by a dispenser or a stamping process. Wall-like structural members may be bonded in position to serve as the banks 222A, 222B.

For sealing the gap between the display elements 14, a first sealing member 224 is placed between the light absorbing members 210 on the peripheries of the display elements 14 to seal the gap between the display elements 14, as shown in FIG. 17, and then the second sealing member 226 is placed on the peripheries of the display elements 14 including the first sealing member 224, i.e., the regions including the banks 222A, 222B in FIG. 17, thus providing a dual sealing structure between the display elements 14.

The first sealing member 224 should preferably be made of a material whose specific gravity is smaller than the substance 130 and which can be cured relatively rapidly by ultraviolet radiation or visible light, in order to minimize the entry of the first sealing member 224 into the substance 130. The material of the first sealing member 224 should preferably be transparent and have a refractive index equal to the refractive index of the substance 130, so that the first sealing member 224 will not be visually perceptible even if it enters the substance 130.

The second sealing member 226 may be applied so as to cover part of the reverse side of the display elements 14 since the substance 130 has already been prevented from seeping out by the first sealing member 224. The second sealing member 226 may be made of a material of excellent adhesion and mechanical strength without regard to optical characteristics.

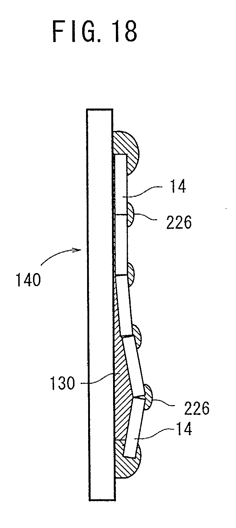

As shown in FIG. 18, if the display apparatus comprising the array of display elements 14 mounted on the large-size light guide panel 140 is vertically installed, the substance 130 such as a matching oil or the like present between the large-size light guide panel 140 and the display elements 14 falls by gravity and causes some of the display elements 14 bulge laterally in a lower portion of the large-size light guide panel 140. At this time, an internal pressure in an upper portion of the large-size light guide panel 140 drops, tending to draw in air from regions which are not strongly sealed.

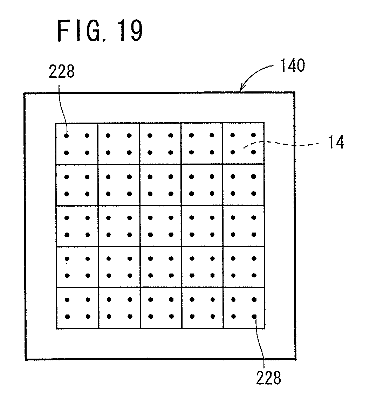

It is therefore preferable to employ first and second countermeasure arrangements as shown in FIGS. 19 through 20B. According to the first countermeasure arrangement, as shown in FIG. 19, the display elements 14 are bonded to the large-size light guide panel 140 by an adhesive applied to the extent that will not adversely affect the reparability of the display apparatus. For example, each display element 14 is bonded at about four bonding points thereon by the adhesive. The display elements 14 thus bonded are capable of reducing any gravity-induced bulge caused in the lower portion of the large-size light guide panel 140 by the substance 130.

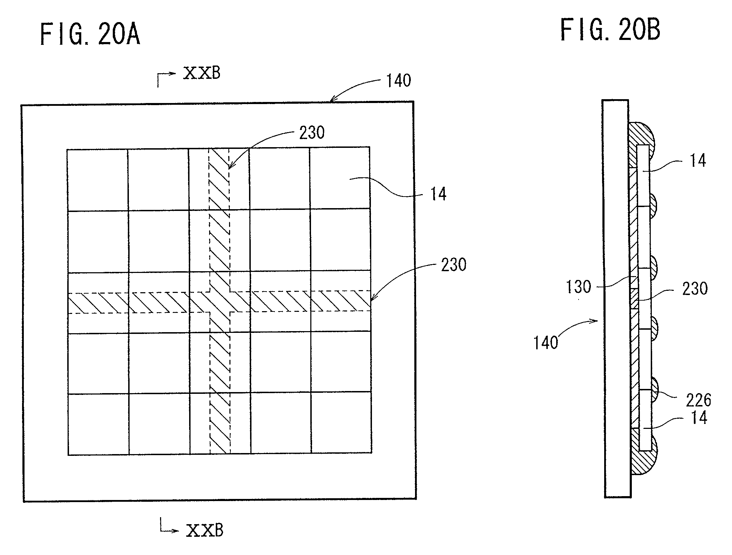

According to the second countermeasure arrangement, as shown in FIGS. 20A and 20B, the area where the substance 130 such as a matching oil or the like is present between the large-size light guide panel 140 and the display elements 14 is divided into a plurality of areas by an adhesive layer 230. In FIGS. 20A and 20B, the area where the substance 130 is present is divided into four areas by the adhesive layer 230 applied in a criss-cross pattern. The display apparatus remains sufficiently reparable by reducing the area which is coated with the adhesive layer 230. The adhesive layer 230 is also effective in reducing any gravity-induced bulge caused in the lower portion of the large-size light guide panel 140 by the substance 130.

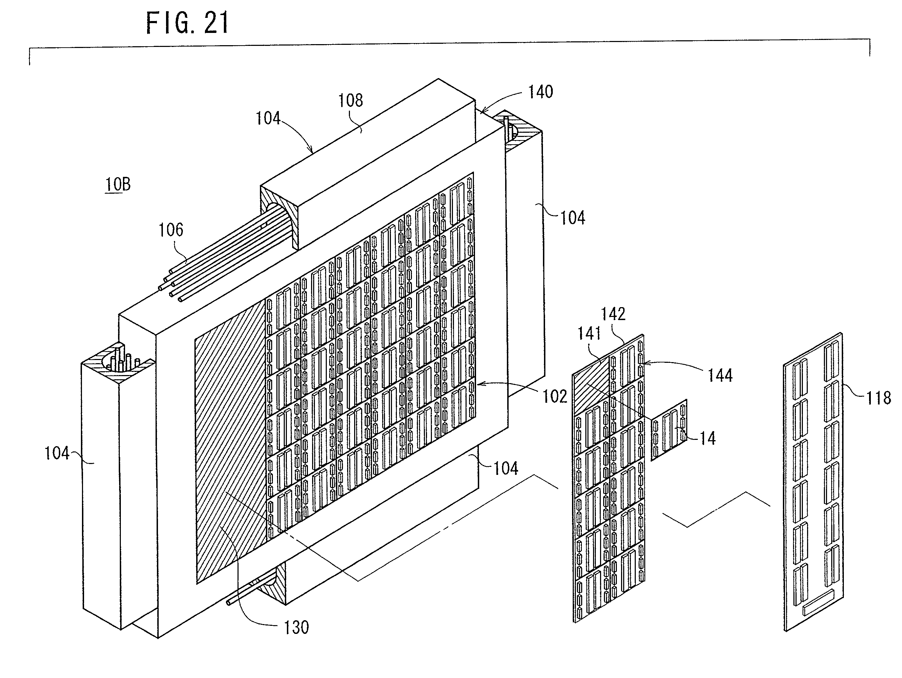

A display apparatus according to a second embodiment of the present invention will be described below with reference to FIG. 21.

As shown in FIG. 21, the display apparatus 10B according to the second embodiment is of substantially the same structure as the display apparatus 10A according to the first embodiment, but has a plurality of display modules 144 disposed on the principal surface of the large-size light guide panel 140.

Each of the display modules 144 comprises a plurality of display elements 14 bonded to a module optical waveguide panel 142. The light-transmissive substrate 130 whose refractive index has been adjusted is interposed between the large-size light guide panel 140 and the module optical waveguide panels 142.

The module optical waveguide panel 142 should preferably have a size which is an integral multiple of the size of the display element 14. In FIG. 21, the module optical waveguide panel 142 has a thickness which is substantially the same as the thickness of the optical waveguide panel 20 of the display element 14, and has a size corresponding to the vertical length of the display surface of the large-size light guide panel 140.

A substance 141 by which the display elements 14 are bonded to the module optical waveguide panel 142 may be an adhesive having a refractive index which is the same as the refractive index of the substance 130, the adhesive being solidified after being cured in order to prevent the display elements 14 from being positionally displaced. The substance 141 should preferably be an adhesive which is flexible after being cured or a rubber-like adhesive in order to reduce thermal expansion. The entire principal surface (display surface) of the optical waveguide panel 20 of each display element 14 is fixed to the module optical waveguide panel 142 by the substance 141 (adhesive). When thus fixed, any warpage of the display element 14 is absorbed by the substance 141, allowing the display element 14 to be firmly fixed to the module optical waveguide panel 142.

In FIG. 21, the light from the light sources 104 is introduced through end faces of the large-size light guide panel 140 into the large-size light guide panel 140, the module optical waveguide panels 142, and the optical waveguide panels 20 of the display elements 14. However, the light from the light sources 104 may be introduced into the large-size light guide panel 140, the module optical waveguide panels 142, and the optical waveguide panels 20 of the display elements 14 through end faces of those module optical waveguide panels which are disposed in outer peripheral edges of the large-size light guide panel 140 and end faces of those optical waveguide panels 20 which are disposed in outer peripheral edges of the large-size light guide panel 140 as well as the end faces of the large-size light guide panel 140.

When the display apparatus 10B according to the second embodiment is fabricated using the array of display modules 144, the joints between the display modules 144 are made almost visibly inappreciable as with the display apparatus 10A according to the first embodiment. The display apparatus 10B is also of excellent reparability.

The substance 141 interposed between the module optical waveguide panels 142 and the display elements 14 may comprise a matching oil rather than the adhesive for making the display elements 14 more reparable.

The display apparatus 10B according to the second embodiment can be manufactured by the process for manufacturing the display apparatus 10A according to the first embodiment. Particularly, it is preferable to polish the end faces of the module optical waveguide panels 142 to a mirror finish. The mirror-finish end faces of the module optical waveguide panels 142 are effective to lower any light leakage from the joints therebetween to an annoyance-free level, making the joints almost visibly inappreciable. Since the mirror-finish end faces of the module optical waveguide panels 142 allow the light from the light source 104 to reach the large-size light guide panel 140, a desired angle of view can be achieved. In polishing the end faces of the module optical waveguide panels 142 to a mirror finish, it is preferable to reduce Rmax to 0.3 or less, or 0.05 or less more preferably, to reduce any light leakage from the joints therebetween to an annoyance-free level.

In machining the module optical waveguide panel 142, the dimensional accuracy thereof should preferably be ± 0.1 mm or less with respect to a reference dimension 100 mm, the squareness between end faces and the squareness between end faces and surfaces should preferably be 0.1 mm or less, and the parallelism between end faces and the parallelism between surfaces should preferably be 0.1 mm or less. The dimensional accuracy thereof should more preferably be ± 0.03 mm or less with respect to a reference dimension 100 mm, the squareness between end faces and the squareness between end faces and surfaces should more preferably be 0.03 mm or less, and the parallelism between end faces and the parallelism between surfaces should more preferably be 0.03 mm or less.

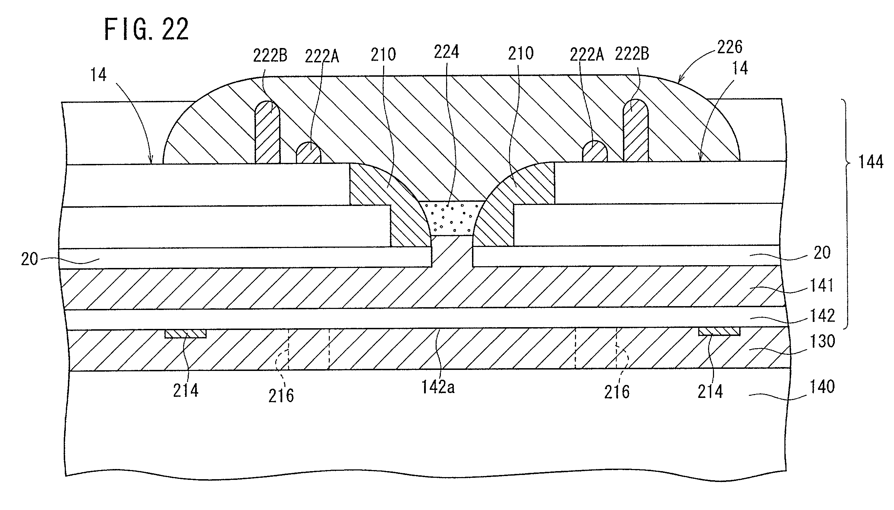

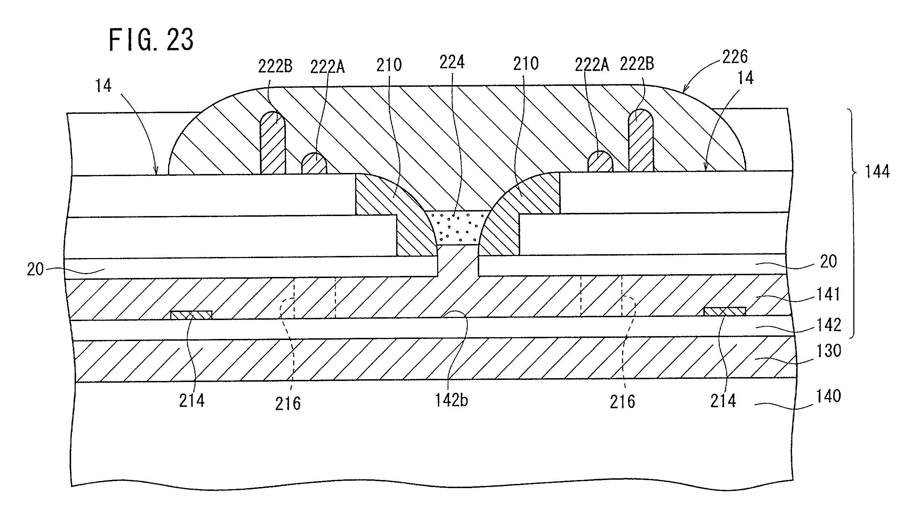

In the display apparatus 10B according to the second embodiment, as shown in FIGS. 22 and 23, it is preferable to provide light absorbing members 210 on the peripheries of the display elements 14, apply a light absorbing layer 214 to an area that appears as a bright defect, and provide projections 216 to make the substances 130, 141 flowable, as with the display apparatus 10A according to the first embodiment.

The light absorbing layer 214 for concealing a bright defect may be applied to a surface 142a (see FIG. 22) or a reverse side 142b (see FIG. 23) of the module optical waveguide panel 142. The projections 216 for making the substances 130, 141 flowable may be provided on the surface 142a and the reverse side 142b of the module optical waveguide panel 142.

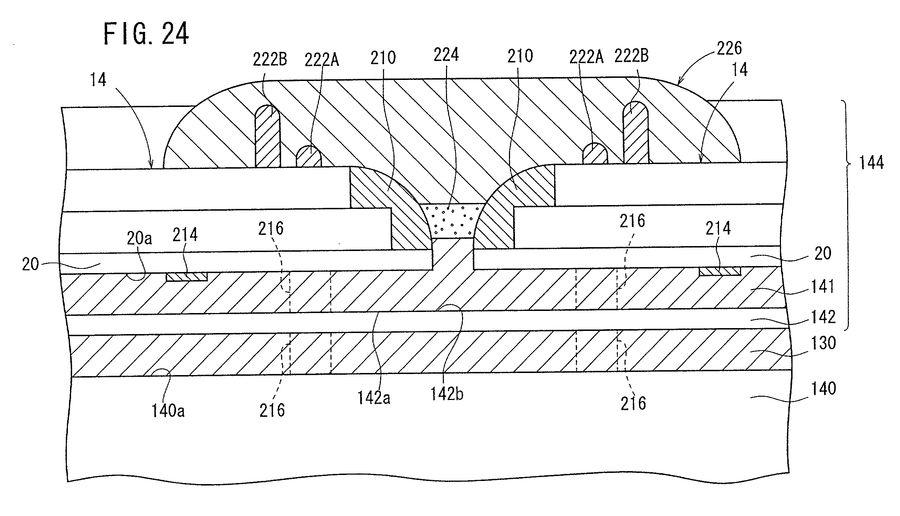

As shown in FIG. 24, the projections 216 may be provided on the surface 142a and the reverse side 142b of the module optical waveguide panel 142, or may be provided on a surface 20a (confronting the module optical waveguide panel 142) of the optical waveguide panel 20 of the display element 14 and a reverse side 140a (confronting the module optical waveguide panel 142) of the large-size light guide panel 140. Thus, the projections 216 may be positioned in various combinations.

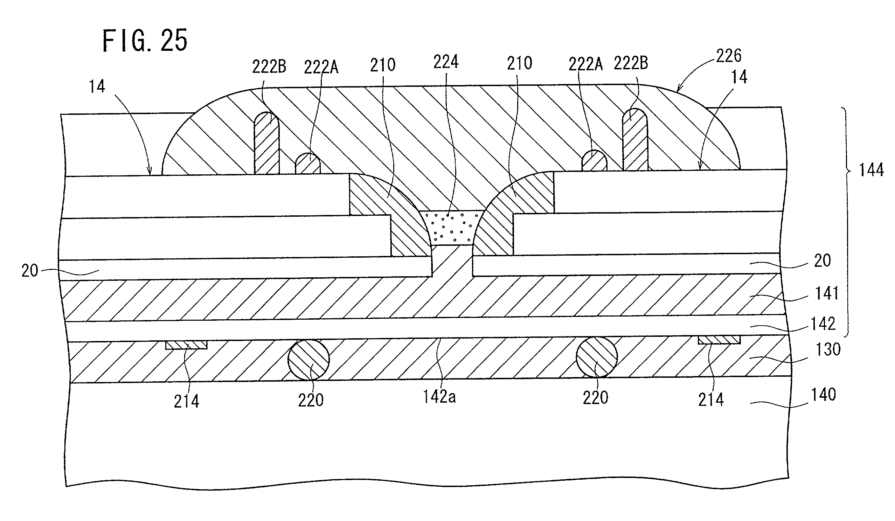

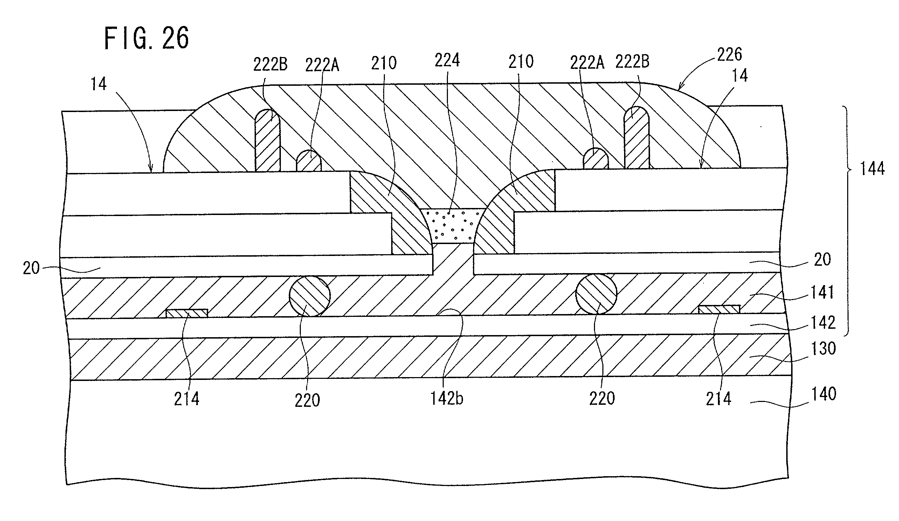

Alternatively, as shown in FIG. 25, beads 220 may be mixed with the substance 130 such as a matching oil or the like which is interposed between the module optical waveguide panel 142 and the large-size light guide panel 140. Conversely, as shown in FIG. 26, beads 220 may be mixed with the substance 141 such as a matching oil or the like which is interposed between the display elements 14 and the module optical waveguide panel 142.

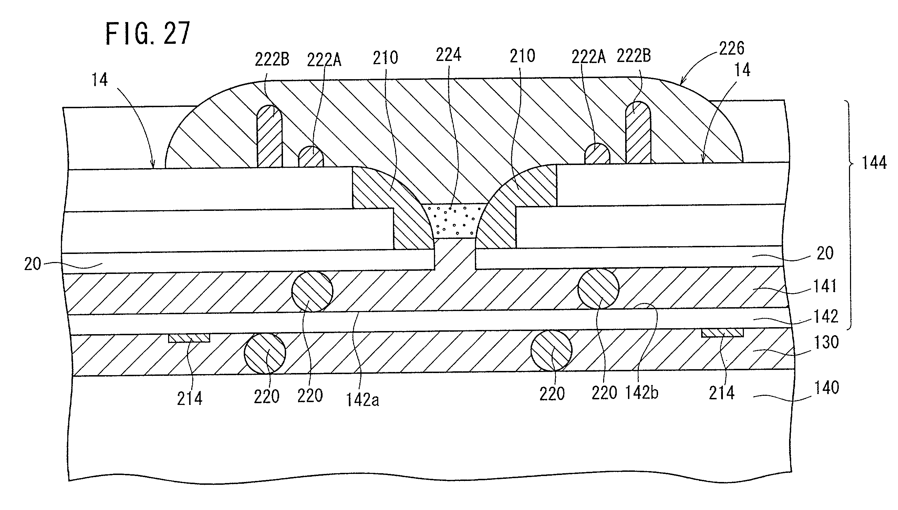

As shown in FIG. 27, beads 220 may be mixed with the substance 130 which is interposed between the module optical waveguide panel 142 and the large-size light guide panel 140, and also with the substance 141 which is interposed between the display elements 14 and the module optical waveguide panel 142.

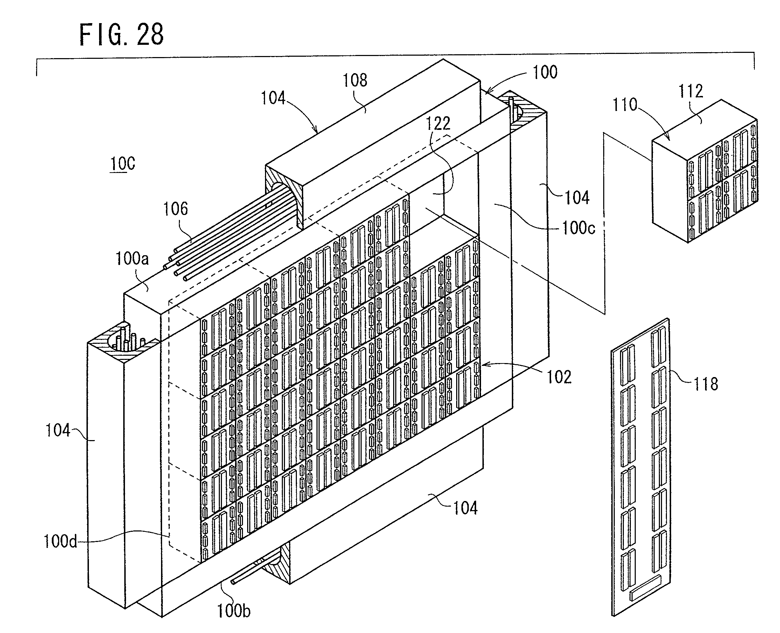

A display apparatus 10C according to a third embodiment of the present invention will be described below with reference to FIGS. 28 through 34.

As shown in FIG. 28, a display apparatus body 102 is incorporated in a frame 100 made up of transparent plates 100a, 100b, 100c, 100d.

The frame 100 is constructed of an upper plate 100a, a lower plate 100b, and two side plates 100c, 100d, each having a prismatic shape and made of acrylic resin. The light sources 104 are mounted on respective outer sides of the frame 100. Each of the light sources 104 comprises a number of cold cathode-ray tubes 106 and a reflector 108 for reflecting light from the cold cathode-ray tubes 106 toward the frame 10.

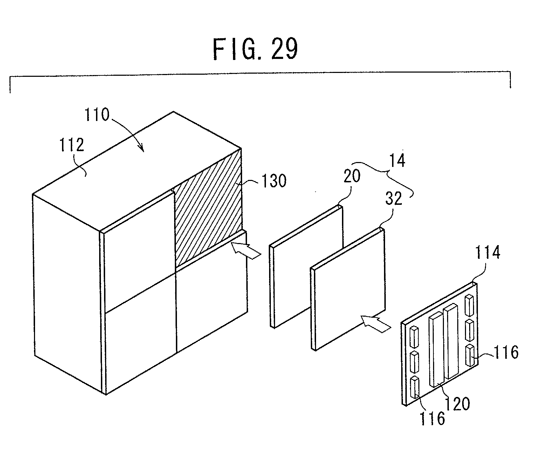

The display apparatus body 102 comprises a matrix of display blocks 110. Each of the display blocks 110 has a size (area) large enough for at least one display element 14 is fixed thereto. For example, as shown in FIG. 29, the display block 110 comprises a separate light guide panel 112 of acrylic resin into which light from the light source 104 is introduced, and at least one display element 14 fixed to a principal surface of the separate light guide panel 112.

In FIG. 29, four display elements 14 are arranged in two rows and two columns on the separate light guide panel 112, with a wiring board 114 mounted on the reverse side of the actuator board 32 of each of the display elements 14. The substance 130 such as a matching oil or the like is interposed between the separate light guide panel and the display elements.

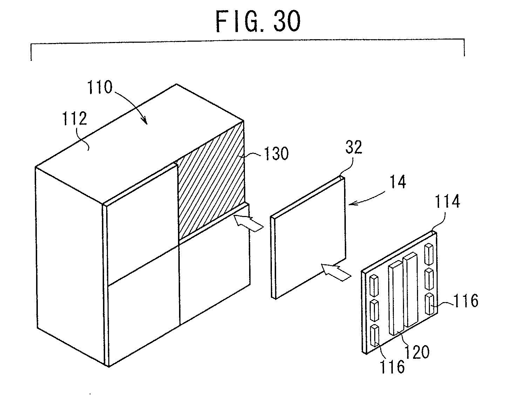

In FIG. 29, the display element 14 which has the optical waveguide panel 20 and the actuator board 32 and the wiring board 114 are attached to the separate light guide panel 112. However, as shown in FIG. 30, the display element 14 which is free of the optical waveguide panel 20 and the wiring board 114 may be attached to the separate light guide panel 112.

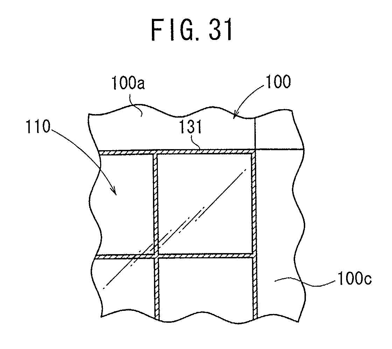

With the display apparatus 10C according to the third embodiment, the display blocks 110 are arranged in a matrix within an opening 122 in the frame 100. As shown in FIG. 31, a light-transmissive substrate 131 whose refractive index has been adjusted is interposed between end faces of the display blocks 110 and between the display blocks 110 and the inner wall surfaces of the frame 100.

The difference between the refractive index of the substance 131 and the refractive index of the display blocks 110 should preferably be as small as possible to reduce any light leakage from the joints between the display blocks 110 to an annoyance-free level. An allowable difference between those refractive indexes, which is related to the thickness of the display blocks 110, should preferably satisfy the following condition:

$$0.9N_1 \leq N_2 \leq 1.1N_1$$

where $N_1$ is the thickness of the separate light guide panels 112 and $N_2$ is the refractive index of the substance 131.

If $0.99N_1 \leq N_2 \leq 1.01N_1$, then the thickness of the separate light guide panels 112 can be increased, thus increasing the ease with which to assemble the structural body and the stability of the assembled structural body.

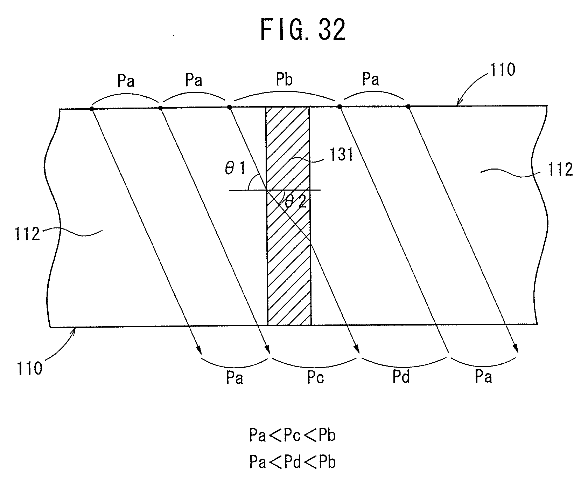

Due to a structural limitation posed by the array of the display blocks 110, as shown in FIG. 32, the pitch Pb of a pixel extending across a joint tends to be larger than the pitch Pa of an ordinary pixel, making the joint visually noticeable. Thus, the refractive index $N_2$ of the substance 131 should preferably be adjusted to the range:

$$N_1 < N_2 \leq 1.01N_1$$

When light emitted from a pixel passes through the joint, the light is refracted owing to the relationship between the refractive indexes $N_1$, $N_2$ thus adjusted. When the light is emitted from the display surface, the pitches Pc, Pa of pitches extending across the joint become close to the pitch Pa (Pa < Pc < Pb, Pa < Pd < Pb), reducing any light leakage from the joints to an annoyance-free level.

The light transmittance of the substance 131 with respect to incident light applied perpendicularly thereto in the visible wavelength range should preferably be 50 % or higher, or more preferably be 70 % or higher, in order to introduce light efficiently into the display elements 14 and reduce the power consumption.

The substrate 131 may be in any phase such as a gas, a liquid, a solid, or a mixture thereof insofar as it satisfies the above condition.

The separate light guide panels 112 may be of any shape, such as a rectangular parallelepiped, a prism, a cylinder, a frustum of a pyramid, or the like insofar as the display elements 14 can be fixed thereto and the separate light guide panels 112 can stably be stacked. However, a rectangular parallelepiped is preferable for machining and assembling processes.

The separate light guide panels 112 should preferably have a vertical dimension ranging from 40 mm to 500mm and a horizontal dimension ranging from 40 mm to 500 mm for assembling and repairing processes. The thickness of the separate light guide panels 112 should preferably in the range from 2 mm to 40 mm in order to facilitateto assemble them and prevent the joints from being visually perceived.

The separate light guide panels 112, the upper plate 100a, the lower plate 100b, and the side plates 100c, 100d of the frame 100 may be made of an organic material or an inorganic material insofar as it has good light transmittance in the visible wavelength range. Specifically, they may be made of glass, quartz, light-transmissive alumina, acrylic resin, methacrylic resin, polycarbonate, vinyl chloride, phenolic resin, vinyl acetate, ABS, fluoroplastics, unsaturated polyester, or the like, either singly or in combination. Of these materials, particularly preferable are glass, acrylic resin, and methacrylic resin from the standpoint of cost and machinability. If the above members are made of glass, then they should preferably be made of Vycor glass, 96 % silicate glass, aluminosilicate glass, borosilicate glass, zinc borosilicate glass, barium borosilicate glass, or the like. The light transmittance of the above members with respect to incident light applied perpendicularly thereto in the visible wavelength range should preferably be 50 % or higher, or more preferably be 70 % or higher.

The substance 131 may be an adhesive having a refractive index which is substantially the same as the frame 100 and the separate light guide panels 112.

A process of manufacturing the display apparatus 10C according to the third embodiment will be described below. First, the surface of each of the separate light guide panels 112 of the display blocks 110 is treated. Specifically, the surface of the separate light guide panel 112 is coated with a hard coating material. The surface of the separate light guide panel 112 thus coated is prevented from being scratched, so that the display apparatus 10C is prevented from producing local white dots when a black image is displayed thereon and also from having an overall increase in its luminance.

The surface of the separate light guide panel 112 is coated with a hard coating material by forming a film of a material harder than the material of the separate light guide panel 112 on the surface of the separate light guide panel 112. While it is important to coat both face and reverse sides of the separate light guide panel 112 for preventing them from being scratched, end faces thereof do not necessarily need to be coated. The hard coating material may be an acrylic hard coating material or a silicone hard coating material.

Then, the end faces of the separate light guide panel 112 are polished to a mirror finish. The mirror-finish end faces of the separate light guide panel 112 are effective to lower any light leakage from the joints therebetween to an annoyance-free level, making the joints almost visibly inappreciable. Since the mirror-finish end faces of the separate light guide panel 112 allow the light from the light source 104 to reach all the display blocks 110, a desired angle of view (depending on the number of the display blocks 110) can be achieved. In polishing the end faces of the separate light guide panel 112 to a mirror finish, it is preferable to reduce Rmax to 0.3 or less, or 0.05 or less more preferably, to reduce any light leakage from the joints therebetween to an annoyance-free level.

In machining the separate light guide panel 112, the dimensional accuracy thereof should preferably be ± 0.1 mm or less with respect to a reference dimension 100 mm, the squareness between end faces and the squareness between end faces and surfaces should preferably be 0.1 mm or less, and the parallelism between end faces and the parallelism between surfaces should preferably be 0.1 mm or less. The dimensional accuracy thereof should more preferably be ± 0.03 mm or less with respect to a reference dimension 100 mm, the squareness between end faces and the squareness between end faces and surfaces should more preferably be 0.03 mm or less, and the parallelism between end faces and the parallelism between surfaces should more preferably be 0.03 mm or less.

With the separate light guide panels 112 thus machined, an accumulated pitch error produced when the display blocks 110 are successively stacked in the opening 122 in the frame 100 is reduced. As a result, the distortion of display images due to pixel pitch shifts is reduced reducing variations in the gaps of the joints and also reducing any light leakage from steps. The joints are thus made less visually perceptible by satisfying the above machining conditions.

The pitch of the pixels of the display elements 14 should preferably match the distance between the pixels at the joints between the display elements 14, thus eliminating the difference between the pixel pitch in the display elements 14 and the pixel pitch at the joints between the display elements 14 for thereby reducing image distortions.

Then, the display elements 14 are fixed in position on the principal surface of each of the separate light guide panels 112. At this time, the separate light guide panel 112 and the optical waveguide panels 20 of the display elements 14 are held in confronting relation to each other, and an adhesive which is either fully solidified (e.g., Benefix VL or Benefix α manufactured by Adel) or a flexible adhesive is applied between the separate light guide panel 112 and the optical waveguide panels 20. After the separate light guide panel 112 and the optical waveguide panels 20 are joined to each other, the adhesive is cured.

The actuator board 32 of each of the display elements 14 may be warped due to shrinkage caused when it is baked, and the display device 14 may also be warped in its entirety due to the warpage of the actuator board 32.

However, since the display elements 14 are fixed to the separate light guide panel 112 by the adhesive, the entire principal surface (display surface) of the optical waveguide panel 20 is fixed to the separate light guide panel 112 by the adhesive. Any warpage of the display element 14 is absorbed by the adhesive, allowing the display element 14 to be firmly fixed to the separate light guide panel 112.

Then, the two side plates 100c, 100d are bonded to the lower plate 100b by a fully solidified adhesive, producing a channel-shaped frame body.

Then, the display blocks 110 are successively stacked on the upper surface of the lower plate 100b of the channel-shaped frame body. At this time, a flexible adhesive 130 (e.g., XSG-1, XVL-14SG2 manufactured by Kyoritsu Chemical Industries or 3088B manufactured by ThreeBond Co., Ltd.) is applied between the lower plate 100b and the display block 110, between the side plates 100c, 100d and the display blocks 110, and between the end faces of the display blocks 110.

After all the display blocks 110 are stacked, the upper plate 100a of the frame 100 is attached in place, as shown in FIG. 16. At this time, a fully solidified adhesive is applied between the upper plate 100a and the side plates 100c, 100d, and a flexible adhesive is applied between the upper plate 100a and the display block 110. Then, a certain load is applied downwardly to the assembly, keeping the display blocks 110 spaced substantially uniformly. Thereafter, the upper plate 100a and the side plates 100c, 100d are firmly fixed to each other.

At this stage, the principal surfaces of display blocks 110 jointly make up a display surface. The display surface may have small steps due to variations in the thicknesses of the separate light guide panels 112 of the display blocks 110. If such small steps are present, then they should preferably be eliminated by polishing, for example. In this manner, the joints are made visibly inappreciable.

Thereafter, the driver board 118 is attached to the wiring boards 114 of the display elements 14 and electrically connected thereto. In this manner, the display apparatus 10C according to the third embodiment is completed.

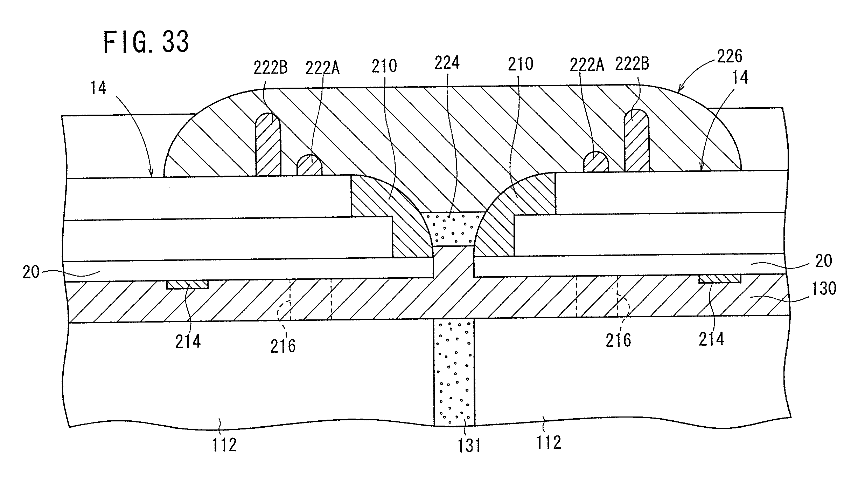

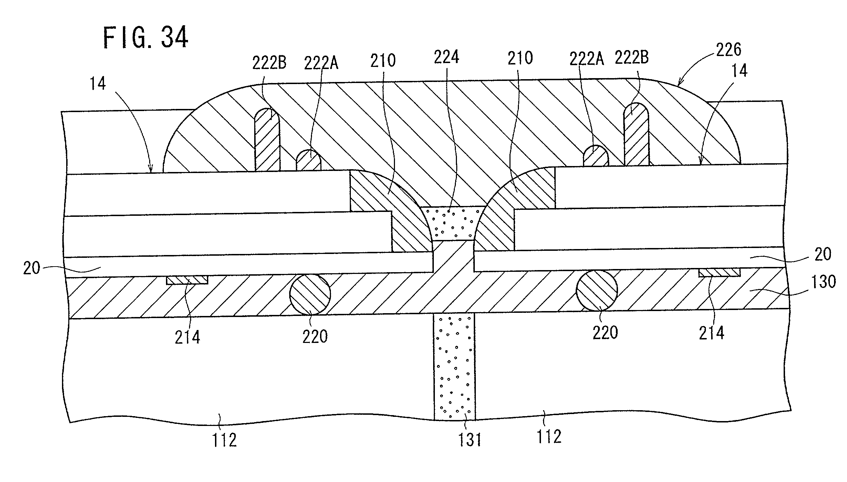

In the display apparatus 10C according to the third embodiment, as shown in FIG. 33, it is preferable to provide light absorbing members 210 on the peripheries of the display elements 14, apply a light absorbing layer 214 to an area that appears as a bright defect, and provide projections 216 to make the substance 130 flowable, as with the display apparatus 10A according to the first embodiment. Alternatively, as shown in FIG. 34, beads 220 may be mixed with the substance 130 such as a matching oil or the like which is interposed between the display elements 14 and the separate light guide panels 112.

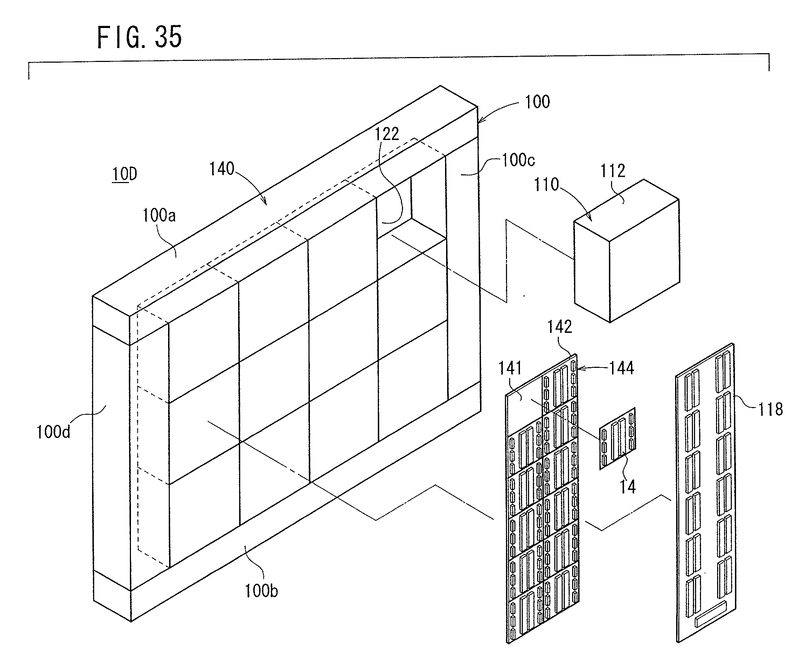

A display apparatus 10D according to a fourth embodiment of the present invention will be described below with reference to FIGS. 35 through 41.

The display apparatus 10D according to the fourth embodiment is of substantially the same structure as the display apparatus 10C according to the third embodiment, but differs therefrom primarily in that each display block 110 is made up of only separate light guide panels 112.

Separate light guide panels 112 are stacked in the opening 122 in the frame 100, and the frame 100 and the stacked light guide panels 112 jointly make up the single large-size light guide panel 140. A plurality of display elements 14 are bonded to a module optical waveguide panel 142, providing a single display module 144. A plurality of display modules 144 are bonded to the large-size light guide panel 140, thus producing the display apparatus 10D according to the fourth embodiment. With this arrangement, the flexible adhesive 131 is interposed between the frame 100, the separate light guide panels 112, and the end faces of the separate light guide panels 112.

Each of the module optical waveguide panels 142 has a size which is an integral multiple of the size of the separate light guide panel 112 or the display element 14. Preferably, it is preferable to select such an integral multiple as to align the joints between the module optical waveguide panels 142 with the joints between the separate light guide panels 112. In FIG. 35, the module optical waveguide panels 142 have a thickness which is substantially the same as the thickness of the optical waveguide panels 20 of the display elements 14, and a size equal to the size of a vertical array of separate light guide panels 112. Therefore, one module 144 is assigned and fixed to a vertical array of separate light guide panels 112.

When the display apparatus 10D according to the fourth embodiment is fabricated using the array of display blocks 110, the joints between the display blocks 110 are made almost visibly inappreciable as with the display apparatus 10A according to the first embodiment. The display apparatus 10D is also of excellent reparability, can be assembled at site, and can be manufactured at a reduced cost.

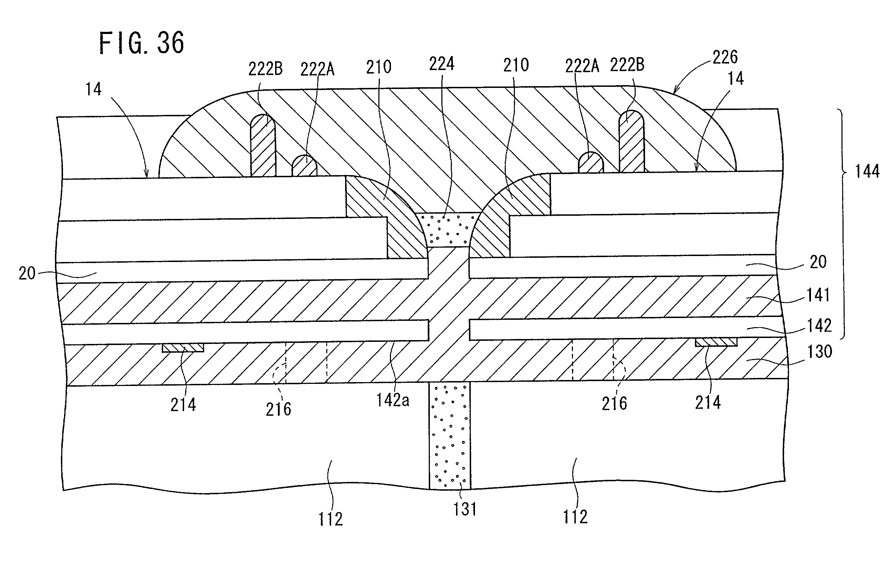

As shown in FIG. 36, it is preferable to provide light absorbing members 210 on the peripheries of the display elements 14, apply a light absorbing layer 214 to an area that appears as a bright defect, and provide projections 216 to make the substance 130 flowable, as with the display apparatus 10A according to the first embodiment.

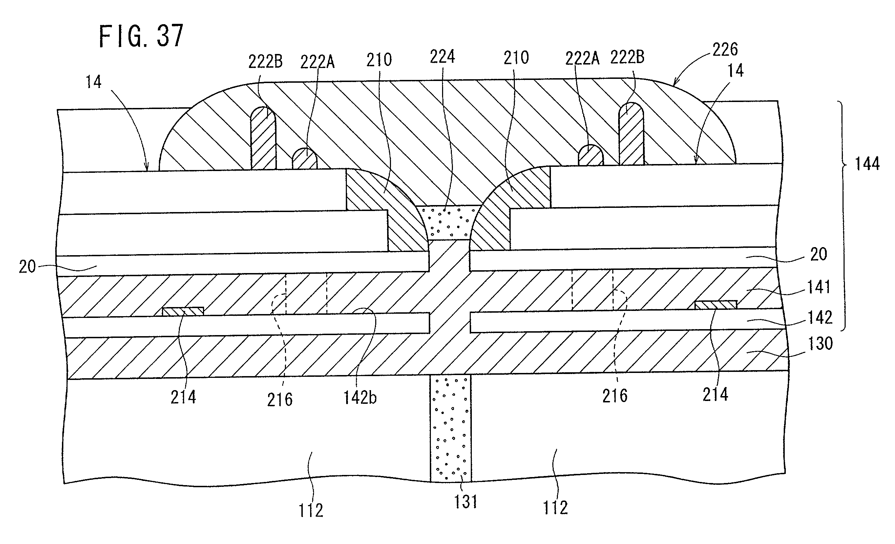

The light absorbing layer 214 for concealing a bright defect may be applied to a surface 142a (see FIG. 36) or a reverse side 142b (see FIG. 37) of the module optical waveguide panel 142. The projections 216 for making the substances 130, 141 flowable may be provided on the surface 142a and the reverse side 142b of the module optical waveguide panel 142.

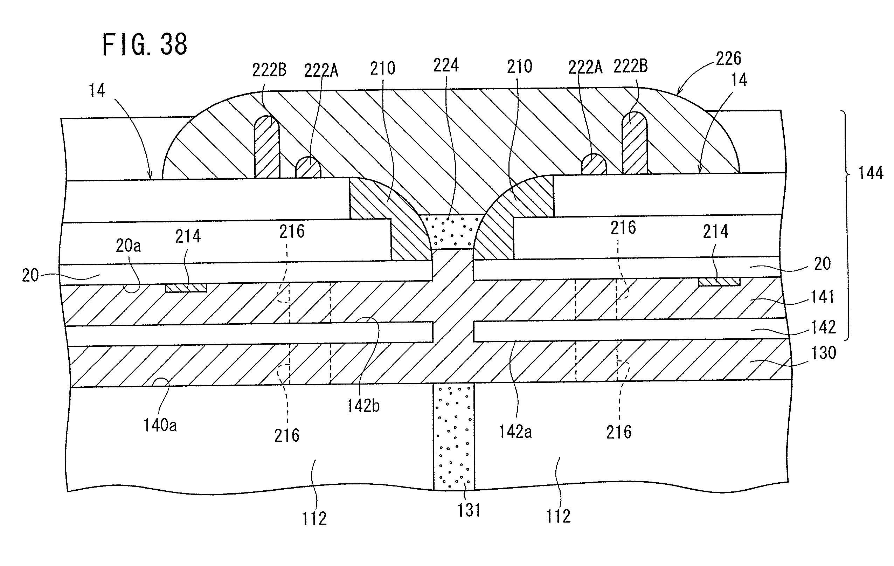

As shown in FIG. 38, the projections 216 may be provided on the surface 142a and the reverse side 142b of the module optical waveguide panel 142, or may be provided on a surface 20a (confronting the module optical waveguide panel 142) of the optical waveguide panel 20 of the display element 14 and a reverse side 140a (confronting the module optical waveguide panel 142) of the large-size light guide panel 140. Thus, the projections 216 may be positioned in various combinations.

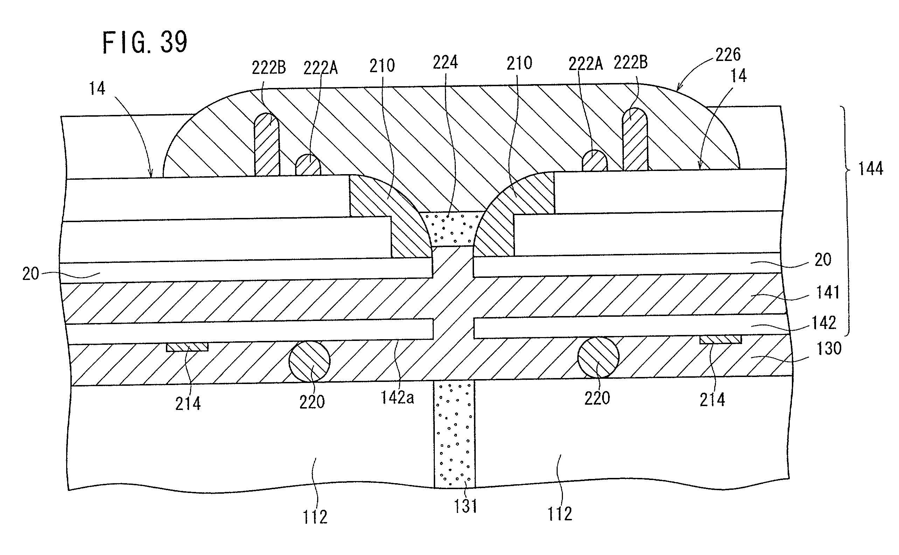

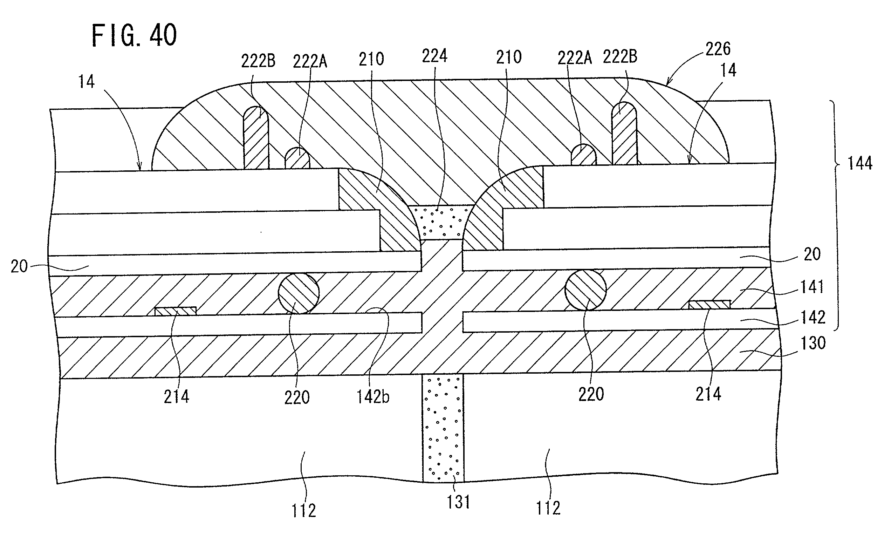

Alternatively, as shown in FIG. 39, beads 220 may be mixed with the substance 130 such as a matching oil or the like which is interposed between the module optical waveguide panel 142 and the large-size light guide panel 140. Conversely, as shown in FIG. 40, beads 220 may be mixed with the substance 141 such as a matching oil or the like which is interposed between the display elements 14 and the module optical waveguide panel 142.

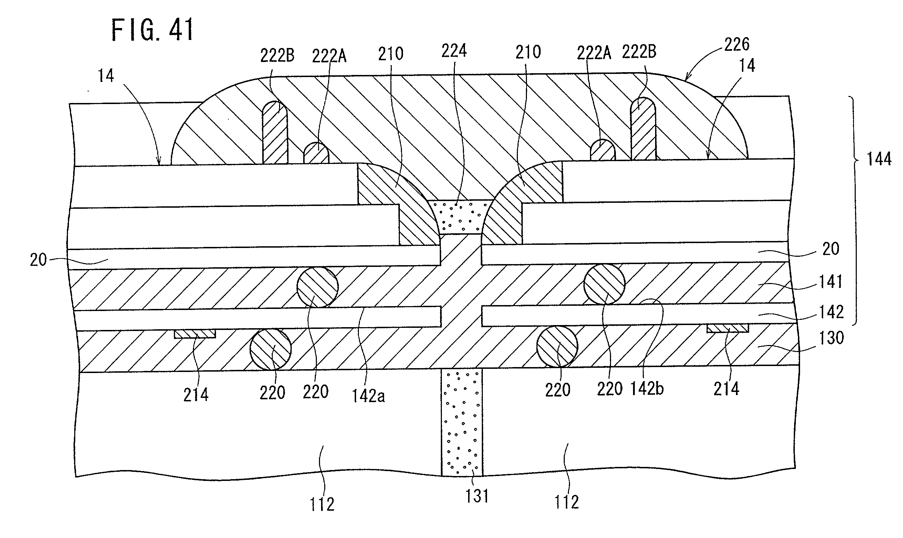

As shown in FIG. 41, beads 220 may be mixed with the substance 130 which is interposed between the module optical waveguide panel 142 and the large-size light guide panel 140, and also with the substance 141 which is interposed between the display elements 14 and the module optical waveguide panel 142.

According to the present invention, as described above, defective display elements can easily be replaced with a new one, and hence the display apparatus are of excellent reparability. Since cross-talk images and black dots due to a warpage of the light guide panels are prevented from occurring, the display apparatus can display images of good quality.

Although certain preferred embodiments of the present invention have been shown and described in detail, it should be understood that various changes and modifications may be made therein.

## Claims

1. A display apparatus comprising:

   a light guide panel (140) for introducing light from a light source (104) thereinto;
   at least two display elements (14) arrayed on a principal surface of said light guide panel (140);
   a first light-transmissive substance (130) whose refractive index has been adjusted, interposed at least between said light guide panel (140) and said display elements (14); and
   a second substance for making said first substance (130) flowable, said second substance being interposed at least between said light guide panel (140) and said display elements (14).

2. A display apparatus according to claim 1, wherein said first substance (130) comprises a matching oil.

3. A display apparatus according to claim 1 or 2, wherein said second substance constitutes a light-transmissive member.

4. A display apparatus according to any one of claims 1 through 3, wherein said second substance is included in each of said display elements (14), and constitutes a projection (216) disposed on a surface of an optical waveguide panel (20) of each of said display elements (14) which confronts said light guide panel (140), or a projection (216) disposed on a surface of said light guide panel (140) which confronts said display elements (14) and provided in an area corresponding to one of said display elements (14).

5. A display apparatus according to any one of claims 1 through 3, further comprising:

   a module optical waveguide panel (142) interposed between said light guide panel (140) and said display elements (14), providing a display module (144) including said display elements (14) therein;
   said first substance (130) being interposed at least between said module optical waveguide panel (142) and said display elements (14).

6. A display apparatus according to claim 5, wherein said second substance is included in each of said display elements (14), and constitutes a projection (216) disposed on a surface of an optical waveguide panel (20) of each of said display elements (14) which confronts said module optical waveguide panel (142), or a projection (216) disposed on a surface of said module optical waveguide panel (142) which confronts said display elements (14) and provided in an area corresponding to one of said display elements (14).

7. A display apparatus according to any one of claims 1 through 3, further comprising:

   a module optical waveguide panel (142) interposed between said light guide panel (140) and said display elements (14), providing a display module (144) including said display elements (14) therein;
   said first substance (130) being interposed at least between said light guide panel (140) and said module optical waveguide panel (142).

8. A display apparatus according to claim 7, wherein said second substance is included in each of said display elements (14), and constitutes a projection (216) disposed on a surface of said module optical waveguide panel (142) which confronts said display elements (14) and provided in an area corresponding to one of said display elements (14), or a projection (216) disposed on a surface of said light guide panel (140) which confronts said module optical waveguide panel (142) and provided in an area corresponding to one of said display elements (14).

9. A display apparatus according to claim 4, 6, or 8, wherein said projection (216) comprises three projections included in each of said display elements (14).

10. A display apparatus according to claim 9, wherein said projections are disposed in respective positions spaced from at least one side of each of said display elements (14) by a distance of at most L/3 where L represents the length of a longer side of said display elements (14).

11. A display apparatus according to claim 9 or 10, wherein each of said display elements (14) comprises an optical waveguide panel (20), an actuator board (32), a plurality of pixel assemblies (30) disposed between said optical waveguide panel (20) and said actuator board (32), and pillars (42) disposed at four corners of each of said pixel assemblies (30), said projections being positioned in alignment with said pillars (42) of each of said display elements (14).

12. A display apparatus according to any one of claims 9 through 11, wherein said projections comprise light absorbing members.

13. A display apparatus according to claim 4, 6, or 8, wherein said projection (216) comprises at least one strip-like projection in each of said display elements (14).

14. A display apparatus according to claim 4, 6, or 8, wherein said projection (216) comprises at least one frame-like projection in each of said display elements (14).

15. A display apparatus according to claim 1, 2, 3, 5, or 7, wherein said second substance constitutes beads (220) mixed with said first substance (130).

# FIG. 1

EP 1 245 988 A2

# FIG. 2

FIG. 3

# FIG. 4

EP 1 245 988 A2

# FIG. 5

FIG. 6

## FIG. 7

| OFFSET POTENTIAL | ON SIGNAL | OFF SIGNAL |
|---|---|---|
| | 60V | 0V |
| 50V | −10V<br>(LIGHT EMITTED) | 50V<br>(LIGHT<br>EXTINGUISHED) |

FIG. 8

FIG. 9

# FIG. 10

FIG. 11

EP 1 245 988 A2

FIG. 12A

20

≤L/3

≤L/3    216a

216a

216a

≤L/3

L

FIG. 12B

20

216b

216b

FIG. 12C

20

216c

FIG. 13A

FIG. 13B

FIG. 14A

FIG. 14B

FIG. 15

EP 1 245 988 A2

FIG. 16

# FIG. 17

EP 1 245 988 A2

FIG. 18

FIG. 19

# FIG. 20A

# FIG. 20B

XXB

140

230

14

230

XXB

130

140

14

230

226

14

EP 1 245 988 A2

FIG. 21

FIG. 22

EP 1 245 988 A2

FIG. 23

EP 1 245 988 A2

FIG. 24

EP 1 245 988 A2

FIG. 25

FIG. 26

# FIG. 27

EP 1 245 988 A2

FIG. 28

# FIG. 29

# FIG. 30

# FIG. 31

# FIG. 32

$$Pa < Pc < Pb$$
$$Pa < Pd < Pb$$

EP 1 245 988 A2

FIG. 33

FIG. 34

EP 1 245 988 A2

FIG. 35

FIG. 36

FIG. 37

EP 1 245 988 A2

FIG. 38

144

226

14

14

222B 222A

210 224 210

222A 222B

20

141

142

130

214

216

216

214

20a

142a

142b

140a

216 216

131

112 112

20

FIG. 39

EP 1 245 988 A2

FIG. 40

FIG. 41

EP 1 245 988 A2

# FIG. 42